# EUROPEAN PATENT SPECIFICATION

(11) **EP 4 221 164 B1**
(45) Date of publication and mention of the grant of the patent: **26.03.2025**
(21) Application number: 23150879.7
(22) Date of filing: 19.01.2020
(51) Int. Cl.: H04M 1/02, H04M 1/72454, G06F 1/16, G06F 3/04883

(54) **DISPLAY METHOD FOR ELECTRONIC DEVICE WITH FLEXIBLE DISPLAY AND ELECTRONIC DEVICE**
ANZEIGEVERFAHREN FÜR EINE ELEKTRONISCHE VORRICHTUNG MIT FLEXIBLER ANZEIGE UND ELEKTRONISCHE VORRICHTUNG
PROCÉDÉ D'AFFICHAGE POUR DISPOSITIF ÉLECTRONIQUE À AFFICHAGE FLEXIBLE ET DISPOSITIF ÉLECTRONIQUE

(30) Priority: 02.02.2019 CN 201910108021
(43) Date of publication of application: 02.08.2023
(62) Divisional of application: 20748031.0
(73) Proprietor: Huawei Technologies Co., Ltd., Longgang District, Shenzhen, Guangdong 518129 (CN)
(72) Inventor: HU, Kai, Shenzheng, Guangdong 518129 (CN); ZHU, Guangze, Shenzheng, Guangdong 518129 (CN); HAN, Ping, Shenzheng, Guangdong 518129 (CN); TIAN, Huajian, Shenzheng, Guangdong 518129 (CN)
(74) Representative: MERH-IP Matias Erny Reichl Hoffmann Patentanwälte PartG mbB

(56) References cited:
- EP-A1- 3 413 547
- EP-A2- 2 674 834
- CN-A- 107 765 835
- US-A1- 2015 338 888
- US-A1- 2018 136 742

## Description

This application claims priority to Chinese Patent Application No. 201910108021.8, filed with the China National Intellectual Property Administration on February 2, 2019 and entitled "DISPLAY METHOD FOR ELECTRONIC DEVICE WITH FLEXIBLE DISPLAY AND ELECTRONIC DEVICE".

### TECHNICAL FIELD

This application relates to the field of terminal technologies, and in particular, to a display method for an electronic device with a flexible display and an electronic device.

### BACKGROUND

A flexible display may also be referred to as a flexible OLED (organic light-emitting diode, organic light-emitting diode). Compared with a conventional screen, the flexible display is not only lighter and thinner in volume, but also much more durable due to its foldable characteristic and good flexibility.

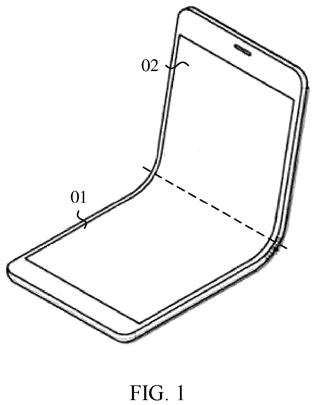

Currently, some manufacturers have applied flexible displays to electronic devices such as mobile phones and tablet computers. As shown in FIG. 1, when using a mobile phone with a flexible display, a user may fold the screen, so that the mobile phone has better flexibility and portability. However, after the screen is folded, content displayed on the screen is segmented accordingly, and the content displayed after the screen is folded is displayed on two planes (that is, a plane 01 and a plane 02). Because there is a specific included angle between the plane 01 and the plane 02, it is quite inconvenient for the user to perform viewing on the mobile phone and operate the mobile phone.

Document CN 107 765 835 A generally discloses a method and device for lighting a screen and a terminal. The method is applied to the terminal provided with a folding display screen, and the folding display screen comprises two foldable screen areas. The method comprises the steps of when the folding display screen is in a screen extinguishing state, obtaining a triggering signal used for triggering lighting of the screen; if the folding display screen is in an outwards folded state, determining a visible screen area and a screen extinguishing screen area of the two screen areas; controlling the visible screen area to be turned from the screen extinguishing state into a lighted state and controlling the screen extinguishing screen area to keep the screen extinguishing state. On the condition that the folding display screen is in the outwards folded state, the terminal does not jointly light the two screen areas, instead, the terminal only lights the visible screen area, which is conductive to saving the electric quantity of the terminal, and misoperations caused when a user touches displayed content in the screen area in the lighted state by mistake can be reduced.

Document US 2018/136742 A1 generally discloses a device that includes a lifting control section which determines, under the following conditions, that the lifting has been carried out. The conditions are as follows: the lifting control section obtains acceleration information indicative of acceleration detected by the acceleration sensor; a waveform representing values of acceleration indicated by the acceleration information with respect to elapsed time has a maximum value and a minimum value; the acceleration is greater than a first predetermined value during a first predetermined period including a time point of the maximum value; and the acceleration is lower than a second predetermined value during a second predetermined period including a time point of the minimum value.

Document US 2015/338888 A1 generally discloses a foldable device that includes: a flexible display configured to display an execution screen of an application; and a controller configured to control the flexible display to display an execution screen of at least one first application on a first surface of the flexible display that is used as a display of the foldable device when the flexible display is folded, and control, in response to the flexible display being unfolded, the flexible display to display the execution screen of the at least one first application and an execution screen of at least one second application related to the at least one first application to be displayed on a second surface of the flexible display that is used as a display of the foldable device when the flexible display is unfolded.

Document EP 2 674 834 A2 generally relates to a portable device comprising a first touch-screen display and a second touch-screen display arranged on at least one foldable panel. In certain embodiments, a portable device displays pieces of information linked to each other through two touch-screen displays, and a user may interact with the portable device through a touch gesture sensed in at least one of the two touch-screen displays. In certain embodiments, a portable device portable device provides, through two touch-screen displays, dual homepages, mode-switching capability, a pocket mode homepage screen, a gallery map, a tack manager, a private broadcast, a clipboard, an electronic book, a video conference, a cooperative game, a calendar, a phone conversation, a camera, mode-switching capability by sensing the folding/un-folding of the panel, and/or the display of information over a hinge between panels.

Document CN 108 205 360 A generally relates to a method and a device for controlling a terminal screen, a terminal and a storage medium. After a detection result shows that a state between a first screen and a second screen changes, the relative position information of the first screen and the second screen is obtained, and the first screen and the second screen are controlled according to the relative position information.

### SUMMARY

This application provides a display method for an electronic device with a flexible display and an electronic device, to adjust a display layout of the flexible display based on a physical form of the flexible display, so that the flexible display can provide relatively desirable use experience for a user in different physical forms. Embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of the present application (or the present disclosure) provide a display method for an electronic device with a flexible display, an electronic device, a computer-readable storage medium and a program product.

To achieve the foregoing objective, the following technical solutions are used in this application.

According to a first aspect, this application provides a display method for an electronic device with a flexible display. Physical forms of the flexible display may include an expanded state and a non-expanded state (for example, a folded state and a support state). When the flexible display is in the non-expanded state, the flexible display is divided into a main screen and a secondary screen. Specifically, the display method includes: When the flexible display is in a black screen state, the electronic device detects a trigger operation used for waking up the flexible display. If the flexible display is in the expanded state, the electronic device may light up the entire flexible display in response to the trigger operation. If the flexible display is in the non-expanded state, the electronic device may light up, in response to the trigger operation, a first screen facing a user. The first screen is the main screen or the secondary screen of the flexible display.

In other words, when the flexible display needs to be woken up, the electronic device may light up a corresponding screen based on a current physical form of the flexible display. In this way, the flexible display can provide relatively desirable use experience for the user when being woken up in different physical forms. This avoids a phenomenon that only a part of the flexible display is lit up when the flexible display is in the expanded state or both the main screen and the secondary screen are lit up when the flexible display is in the folded state.

In a possible implementation, after the electronic device detects the trigger operation used for waking up the flexible display, the method further includes: The electronic device determines a current physical form of the flexible display.

For example, that the electronic device determines a current physical form of the flexible display specifically includes: The electronic device may calculate an included angle between the main screen and the secondary screen based on data detected by an acceleration sensor and a gyroscope. Further, the electronic device may determine, based on the included angle between the main screen and the secondary screen, whether the flexible display is in the expanded state or the non-expanded state. Certainly, the electronic device may determine the current physical form of the flexible display in another manner. For example, the electronic device may measure a distance between the main screen and the secondary screen by using a distance sensor, and further determine the current physical form of the flexible display based on the distance. This is not limited in this embodiment of this application.

In a possible implementation, if the flexible display is in the non-expanded state, before the electronic device lights up, in response to the trigger operation, the first screen facing the user, the method further includes: The electronic device determines, by using detection data reported by at least one of an infrared sensor, a camera, an optical proximity sensor, or a touch component of the flexible display, the first screen facing the user.

For example, if an infrared sensor in the main screen captures an infrared signal radiated by a human body, the electronic device may determine that the first screen facing the user is the main screen, or if an infrared sensor in the secondary screen captures the infrared signal radiated by the human body, the electronic device may determine that the first screen facing the user is the secondary screen;
if a camera in the main screen captures face information, the electronic device may determine that the first screen facing the user is the main screen, or if a camera in the secondary screen captures the face information, the electronic device may determine that the first screen facing the user is the secondary screen;
if an optical proximity sensor in the main screen detects that ambient light intensity falls within a preset interval, the electronic device may determine that the first screen facing the user is the main screen, or if an optical proximity sensor in the secondary screen detects that the ambient light intensity falls within the preset interval, the electronic device may determine that the first screen facing the user is the secondary screen; or
if a location of a touch point and a quantity of touch points on the main screen match a preset gripping posture, the electronic device may determine that the first screen facing the user is the main screen, or if a location of a touch point and a quantity of touch points on the secondary screen match the preset gripping posture, the electronic device may determine that the first screen facing the user is the secondary screen.

In a possible implementation, the trigger operation performed by the user for waking up the flexible display may be specifically an operation of pressing/tapping a power button of the electronic device by the user, a hand raising operation of gripping the electronic device by the user, an incoming call event, or a USB plugging/unplugging event.

According to a second aspect, this application provides a display method for an electronic device with a flexible display. Physical forms of the flexible display include an expanded state and a non-expanded state. When the flexible display is in the non-expanded state, the flexible display is divided into a main screen and a secondary screen. The method may specifically include: When the flexible display is in a black screen state, the electronic device detects a trigger operation performed by a user on the flexible display, and an action point of the trigger operation is located on a first screen (the first screen is the main screen or the secondary screen). If the flexible display is in the expanded state, the electronic device may light up the entire flexible display in response to the trigger operation. If the flexible display is in the non-expanded state, the electronic device may light up, in response to the trigger operation, the first screen on which the action point is located.

In other words, the electronic device can automatically light up a corresponding screen based on a specific physical form of the flexible display and a location at which the user performs triggering on the flexible display, so that the user can wake up the flexible display in different physical forms by using a preset gesture.

According to a third aspect, this application provides a display method for an electronic device with a flexible display. Physical forms of the flexible display include an expanded state and a non-expanded state. When the flexible display is in the non-expanded state, the flexible display is divided into a main screen and a secondary screen. The method specifically includes: When the flexible display is in a black screen state, the electronic device detects an expansion action performed by a user on the flexible display; and the electronic device lights up the entire flexible display in response to the expansion action. In other words, if the flexible display of the electronic device is in a folded state, the user may wake up, by performing the trigger operation of expanding the flexible display, the flexible display of the electronic device to light up the entire flexible display. This is convenient for the user to directly operate the electronic device on the large screen after expanding the flexible display.

In a possible implementation, that the electronic device detects an expansion action performed by a user on the flexible display includes: Because power consumption of a Hall effect sensor in an "always on" state is relatively low, the electronic device may detect an included angle between the main screen and the secondary screen by using the Hall effect sensor, and when the included angle between the main screen and the secondary screen is greater than a first preset value, the electronic device may determine the expansion action performed by the user on the flexible display. Alternatively, the electronic device may detect an included angle between the main screen and the secondary screen by using an acceleration sensor and a gyroscope, and when the included angle between the main screen and the secondary screen is greater than a first preset value, the electronic device may determine the expansion action performed by the user on the flexible display.

In a possible implementation, that the electronic device detects an expansion action performed by a user on the flexible display includes: When the electronic device may first detect an included angle between the main screen and the secondary screen by using a Hall effect sensor with relatively low power consumption, and if detecting that the included angle between the main screen and the secondary screen is greater than a first preset value, the electronic device may start an acceleration sensor and a gyroscope with higher detection precision to continue to detect the included angle between the main screen and the secondary screen. When the included angle between the main screen and the secondary screen is greater than a second preset value (the second preset value is greater than the first preset value), it indicates that the user is probably intended to expand the flexible display. In this case, the electronic device may determine the expansion action performed by the user on the flexible display.

In other words, the electronic device lights up the entire flexible display only after detecting that the included angle between the main screen and the secondary screen is greater than the second preset value; and the electronic device does not need to light up the entire flexible display when the included angle between the main screen and the secondary screen does not reach the second preset value. This reduces power consumption required for waking up the screen of the mobile phone.

In a possible implementation, that the electronic device determines the expansion action performed by the user on the flexible display, when the included angle between the main screen and the secondary screen is greater than a second preset value includes: if detecting, in a preset time, that the included angle between the main screen and the secondary screen changes from the first preset value to the second preset value, the electronic device determines the expansion action performed by the user on the flexible display. If it is not detected, in the preset time, that the included angle between the main screen and the secondary screen is greater than the second preset value, it indicates that currently, the user may not be intended to expand the folded screen. In this case, the flexible display may keep in the black screen state to reduce power consumption of the electronic device.

With reference to the first aspect to the third aspect, in a possible implementation, the method further includes: The electronic device displays content on the first screen (the first screen is the main screen or the secondary screen) of the flexible display. The electronic device detects a preset operation performed on the flexible display. An action point of the preset operation is located on a second screen. When the first screen is the main screen, the second screen is the secondary screen. When the first screen is the secondary screen, the second screen is the main screen. In this case, if the flexible display is in the expanded state, the electronic device may display, on the entire flexible display in response to the preset operation, the content displayed on the first screen. If the flexible display is in the non-expanded state, the electronic device may display, on the second screen in response to the preset operation, the content displayed on the first screen. After the content displayed on the first screen is switched to the second screen for display, specific content displayed on the second screen may be the same as or different from the specific content displayed on the first screen.

In this way, if the electronic device incorrectly wakes up a screen that is on the flexible display and that the user does not expect to view, the user can manually switch, by performing a preset operation, currently displayed content to the entire flexible display or a part that is of the flexible display and that faces the user, for continued display, to improve use experience of the user.

With reference to the first aspect to the third aspect, in a possible implementation, the method further includes: When the flexible display is in the expanded state, the electronic device may display content on the entire flexible display. If detecting that the flexible display is switched from the expanded state to the non-expanded state, the electronic device may display, on the main screen or the secondary screen facing the user, the content displayed on the entire flexible display.

With reference to the first aspect to the third aspect, in a possible implementation, the method further includes: When the flexible display is in the non-expanded state, the electronic device displays content on the main screen or the secondary screen. If detecting that the flexible display is switched from the non-expanded state to the expanded state, the electronic device displays, on the entire flexible display, the content displayed on the main screen or the secondary screen.

In other words, after the electronic device lights up the flexible display, the electronic device may further automatically switch, based on a change status of a physical form of the flexible display, currently displayed content to the entire flexible display or a part that is of the flexible display and that faces the user. This is convenient for the user to perform viewing on the electronic device and operate the electronic device.

With reference to the first aspect to the third aspect, in a possible implementation, the method further includes: When the flexible display is in the non-expanded state, the electronic device displays content on the first screen. The first screen is the main screen or the secondary screen. If detecting that the user has performed a flip operation on the electronic device, the electronic device detects a change status of a gripping posture of the user. If the gripping posture remains unchanged when the electronic device is flipped, the electronic device may continue to display the content on the first screen. If the change status of the gripping posture when the electronic device is flipped satisfies a preset condition, the electronic device may switch the content displayed on the first screen to a second screen for continued display. When the first screen is the main screen, the second screen is the secondary screen. When the first screen is the secondary screen, the second screen is the main screen.

In other words, after the electronic device wakes up the flexible display, when the flip operation is performed on the electronic device, the electronic device may intelligently switch displayed content between different screens based on the change status of the gripping posture of the user. This ensures that when the flexible display is in various physical forms, the electronic device can present the displayed content to the user by using a screen facing the user. In this way, the flexible display can provide relatively desirable use experience for the user in different physical forms.

According to a fourth aspect, this application provides a display method for an electronic device with a flexible display. Physical forms of the flexible display include an expanded state and a non-expanded state. When the flexible display is in the non-expanded state, the flexible display is divided into a main screen and a secondary screen. The method includes: The electronic device displays content on a first screen of the flexible display. The first screen is the main screen or the secondary screen. The electronic device detects a preset operation performed on a flexible display. An action point of the preset operation is located on a second screen (when the first screen is the main screen, the second screen is the secondary screen; or when the first screen is the secondary screen, the second screen is the main screen). If the flexible display is in the expanded state, the electronic device may display, on the entire flexible display in response to the preset operation, the content displayed on the first screen. If the flexible display is in the non-expanded state, the electronic device may display, on the second screen in response to the preset operation, the content displayed on the first screen.

For example, when the electronic device displays the content on the first screen of the flexible display, the second screen is in a black screen state; and when the electronic device displays, on the second screen, the content displayed on the first screen, the electronic device may set the first screen to be in a black screen state.

According to a fifth aspect, this application provides a display method for an electronic device with a flexible display. Physical forms of the flexible display include an expanded state and a non-expanded state. When the flexible display is in the non-expanded state, the flexible display is divided into a main screen and a secondary screen. The method includes: When the flexible display is in the non-expanded state, the electronic device displays content on a first screen. The first screen is the main screen or the secondary screen. If detecting that a user has performed a flip operation on the electronic device, the electronic device detects a change status of a gripping posture of the user. If the gripping posture remains unchanged when the electronic device is flipped, it usually indicates that the user expects to flip the screen on which display is being performed, for another user to perform viewing. In this case, the electronic device may continue to display the displayed content on the first screen. Correspondingly, if the change status of the gripping posture of the user when the electronic device is flipped satisfies a preset condition, it indicates that the user has performed a flip operation on the mobile phone in a palm. In this case, the electronic device switches the content displayed on the first screen to a second screen for continued display. In this way, after the electronic device is flipped, the mobile phone can present the displayed content to the user by using a screen facing the user, so that the flexible display can provide relatively desirable use experience for the user in different physical forms.

For example, the preset condition includes: Before the electronic device is flipped, a thumb of the user is close to a first side edge, and the remaining fingers of the user are close to a second side edge; and after the electronic device is flipped, the thumb of the user is close to the second side edge, and the remaining fingers of the user are close to the first side edge. The first side edge and the second side edge are two side edges of the first screen that are opposite to each other.

According to a sixth aspect, this application provides a display method for an electronic device with a flexible display. Physical forms of the flexible display include an expanded state and a non-expanded state. When the flexible display is in the non-expanded state, the flexible display is divided into a main screen and a secondary screen. The method includes: When the flexible display is in a black screen state, the electronic device detects a trigger operation used for waking up the flexible display. The trigger operation is specifically an operation of lifting the electronic device. If the flexible display is in the expanded state, the electronic device may light up the entire flexible display in response to the trigger operation. If the flexible display is in the non-expanded state, the electronic device may light up a first screen in response to the trigger operation. The first screen is the main screen or the secondary screen.

In a possible implementation, if the flexible display is in the non-expanded state, before the electronic device lights up the first screen in response to the trigger operation, the method further includes: The electronic device determines the main screen or the secondary screen facing the user as the first screen; or the electronic device determines the main screen or the secondary screen facing upward as the first screen. In other words, when the user lifts the electronic device, if the flexible display is in the non-expanded state, the electronic device can automatically light up the screen facing the user or facing upward. This facilitates a user operation.

In a possible implementation, that the electronic device determines the main screen or the secondary screen facing the user as the first screen includes: The electronic device determines, by using detection data reported by at least one of an infrared sensor, a camera, an optical proximity sensor, or a touch component of the flexible display, the first screen facing the user. The first screen includes the main screen or the secondary screen. For a specific solution, refer to corresponding descriptions in the first aspect. Details are not described herein again.

In a possible implementation, that the electronic device determines the main screen or the secondary screen facing upward as the first screen includes: The electronic device determines, by using data detected by an acceleration sensor and a gyroscope, the main screen or the secondary screen facing upward as the first screen.

In a possible implementation, if the flexible display is in the non-expanded state, before the electronic device lights up the first screen in response to the trigger operation, the method further includes: The electronic device may determine, by using the data detected by the acceleration sensor and the gyroscope, that the screen facing upward is a first candidate screen. The electronic device may further determine, by using the detection data reported by the at least one of the infrared sensor, the camera, the optical proximity sensor, or the touch component of the flexible display, whether a second candidate screen facing the user exists. If a second candidate screen facing the user exists, the electronic device may determine the second candidate screen as the first screen. If no candidate screen facing the user exists, the electronic device determines the first candidate screen as the first screen. In other words, if the flexible display is in the non-expanded state, when the user lifts the electronic device, the electronic device may preferentially light up the screen facing the user; and if no operation facing the user is determined, the electronic device may light up the screen facing upward.

According to a seventh aspect, this application provides an electronic device, including a flexible display, one or more sensors, one or more processors, one or more memories, and one or more computer programs. The processor is coupled to all of the sensor, the flexible display, and the memory. The one or more computer programs are stored in the memory. When the electronic device runs, the processor executes the one or more computer programs stored in the memory, so that the electronic device performs the display method according to any one of the foregoing aspects or the implementations of the foregoing aspects.

According to an eighth aspect, this application provides a computer storage medium, including computer instructions. When the computer instructions are run on an electronic device, the electronic device is enabled to perform the display method according to any one of the first aspect or the implementations of the first aspect.

According to a ninth aspect, this application provides a computer program product. When the computer program product is run on an electronic device, the electronic device is enabled to perform the display method according to any one of the first aspect or the implementations of the first aspect.

It can be understood that the electronic device in the seventh aspect, the computer storage medium in the eighth aspect, and the computer program product in the ninth aspect that are provided above are all configured to perform the corresponding methods provided above. Therefore, for beneficial effects that can be achieved by the electronic device, the computer storage medium, and the computer program product, reference may be made to the beneficial effects of the corresponding methods provided above. Details are not described herein again.

### BRIEF DESCRIPTION OF DRAWINGS

FIG. 1 is a schematic structural diagram of an electronic device with a flexible display in the prior art;
FIG. 2 is a schematic structural diagram 1 of an electronic device according to an embodiment of this application;
FIG. 3A is a schematic structural diagram 2 of an electronic device according to an embodiment of this application;
FIG. 3B is a schematic structural diagram 3 of an electronic device according to an embodiment of this application;
FIG. 4 is a schematic structural diagram 4 of an electronic device according to an embodiment of this application;
FIG. 5A is a schematic structural diagram 5 of an electronic device according to an embodiment of this application;
FIG. 5B is a schematic structural diagram 6 of an electronic device according to an embodiment of this application;
FIG. 6A is a schematic architectural diagram 1 of an operating system in an electronic device according to an embodiment of this application;
FIG. 6B is a schematic architectural diagram 2 of an operating system in an electronic device according to an embodiment of this application;
FIG. 6C is a schematic architectural diagram 3 of an operating system in an electronic device according to an embodiment of this application;
FIG. 7A is a schematic flowchart of a display method for an electronic device with a flexible display according to an embodiment of this application;
FIG. 7B-1 and FIG. 7B-2 are a schematic scenario diagram 1 of a display method for an electronic device with a flexible display according to an embodiment of this application;

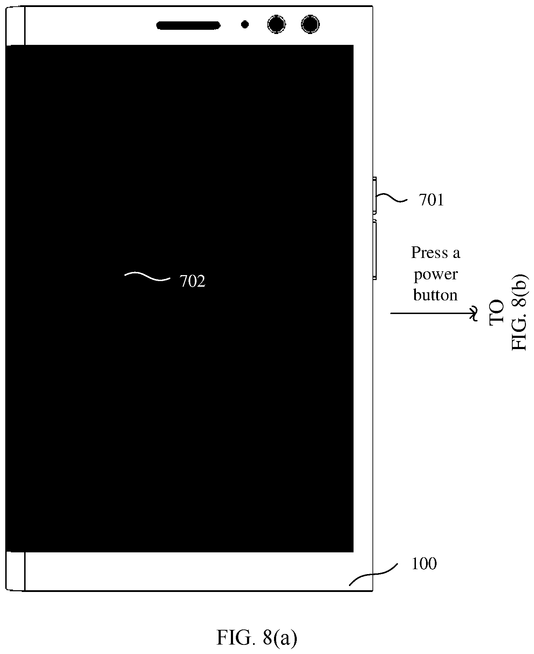

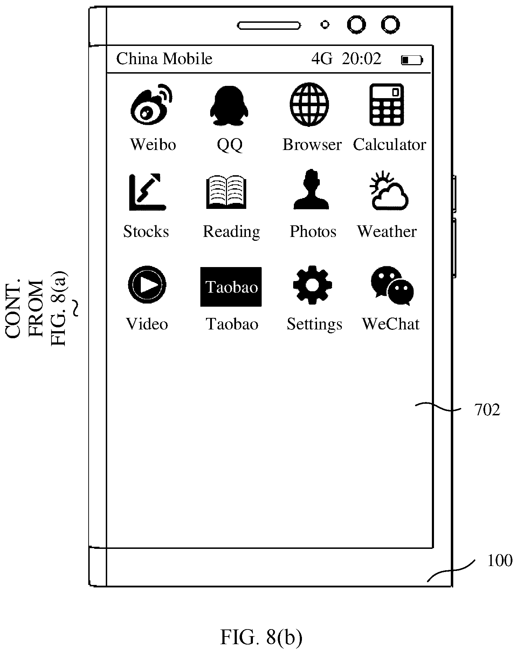

FIG. 8(a) and FIG. 8(b) are a schematic scenario diagram 2 of a display method for an electronic device with a flexible display according to an embodiment of this application;

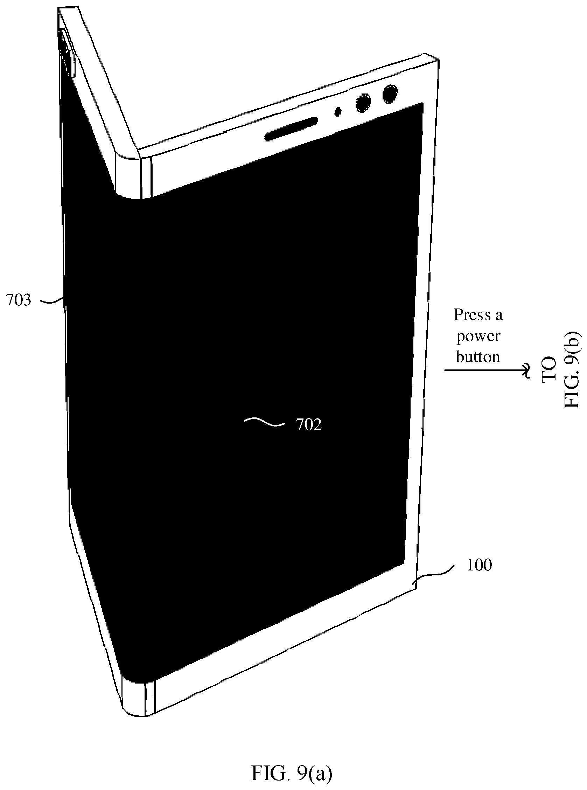

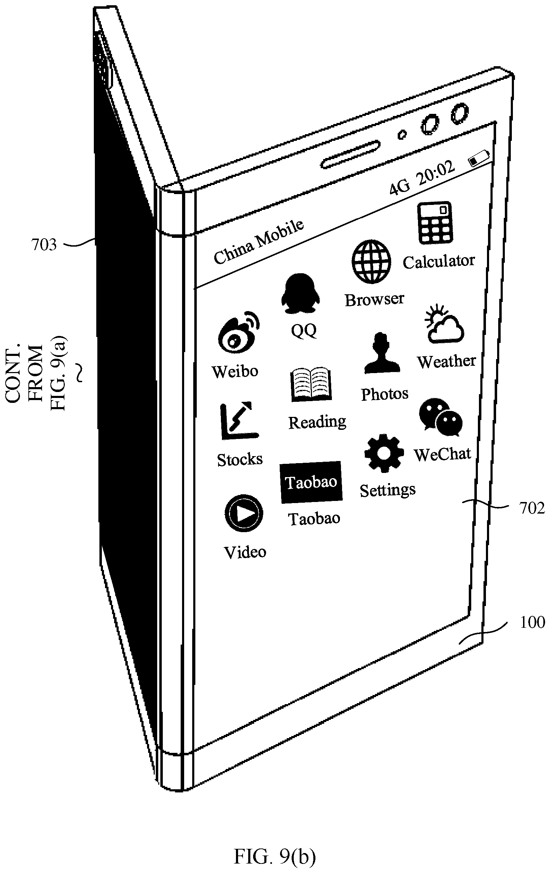

FIG. 9(a) and FIG. 9(b) are a schematic scenario diagram 3 of a display method for an electronic device with a flexible display according to an embodiment of this application;

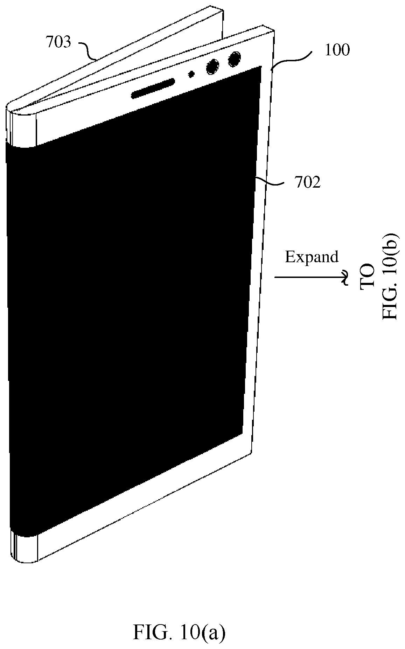

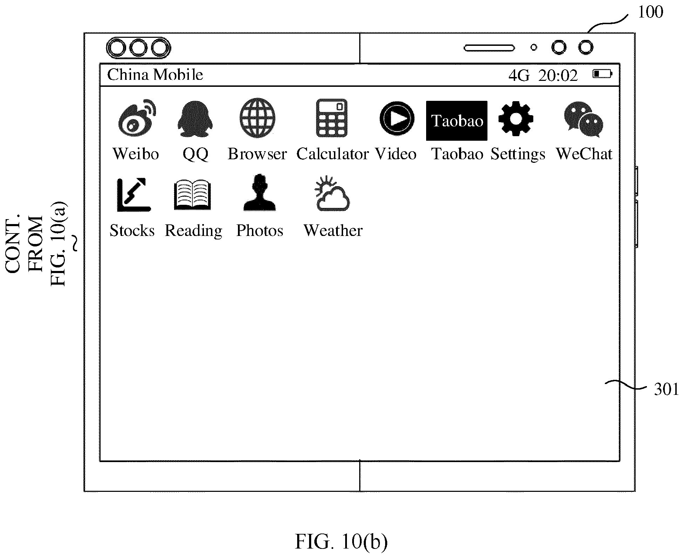

FIG. 10(a) and FIG. 10(b) are a schematic scenario diagram 4 of a display method for an electronic device with a flexible display according to an embodiment of this application;

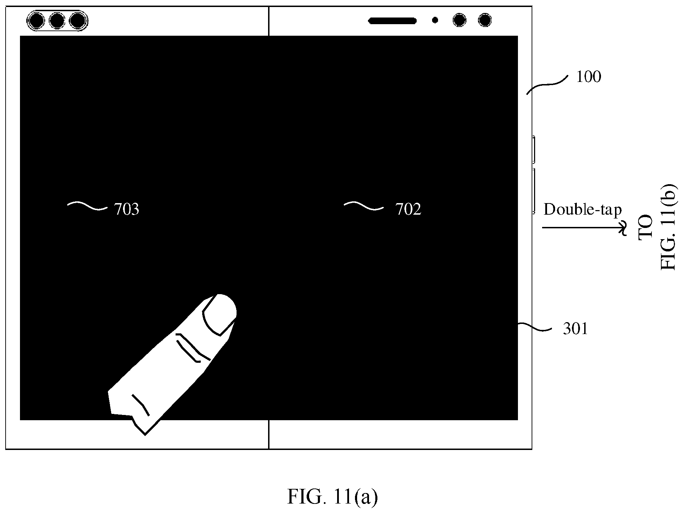

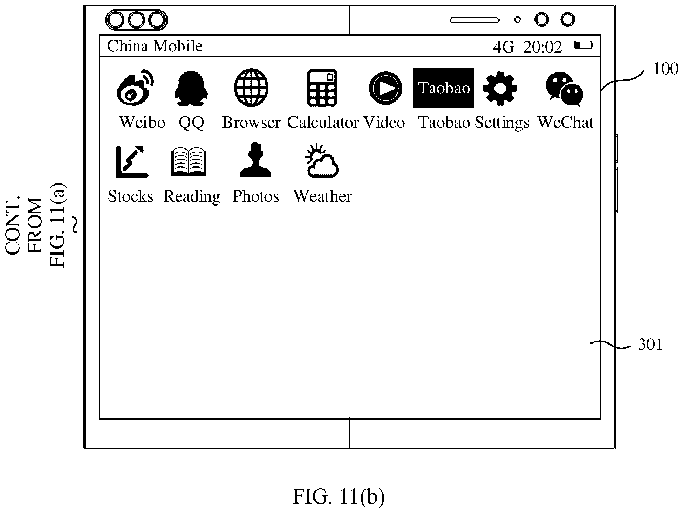

FIG. 11(a) and FIG. 11(b) are a schematic scenario diagram 5 of a display method for an electronic device with a flexible display according to an embodiment of this application;

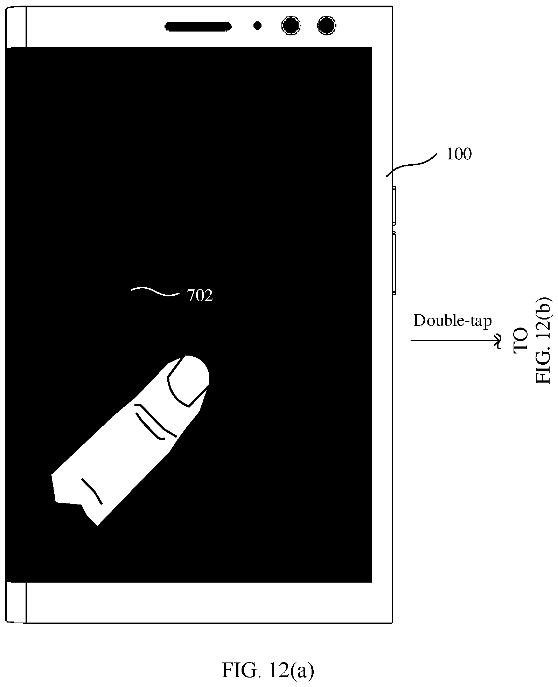

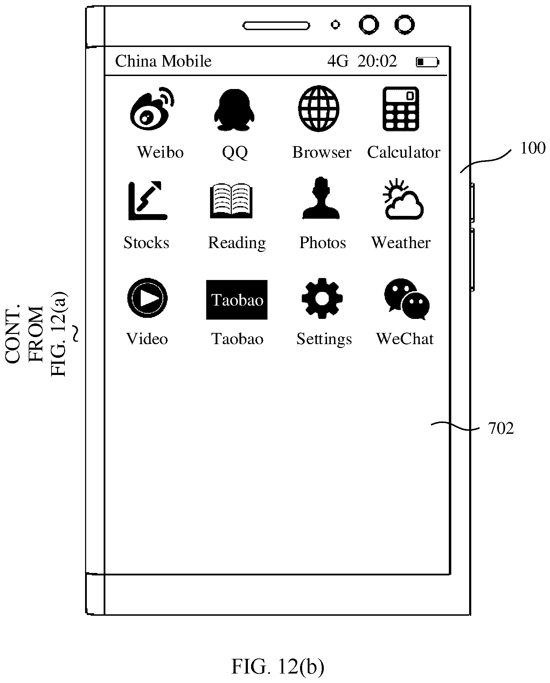

FIG. 12(a) and FIG. 12(b) are a schematic scenario diagram 6 of a display method for an electronic device with a flexible display according to an embodiment of this application;

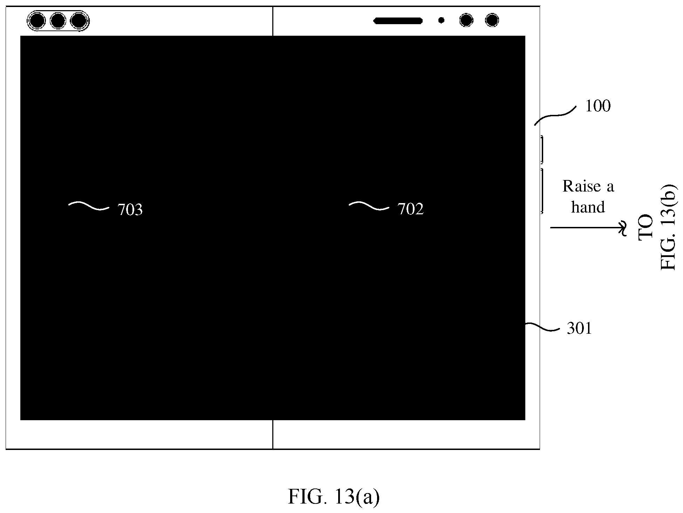

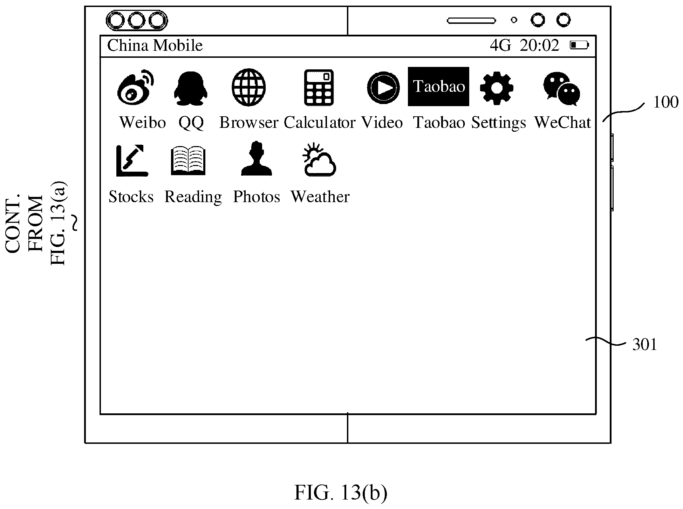

FIG. 13(a) and FIG. 13(b) are a schematic scenario diagram 7 of a display method for an electronic device with a flexible display according to an embodiment of this application;

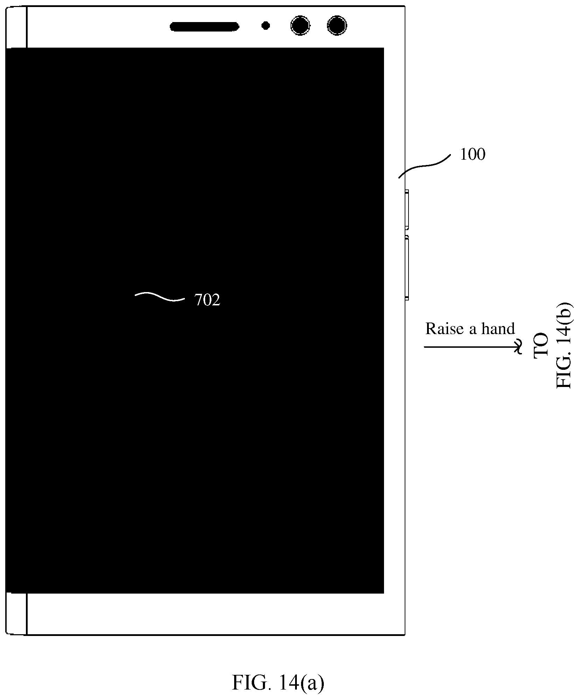

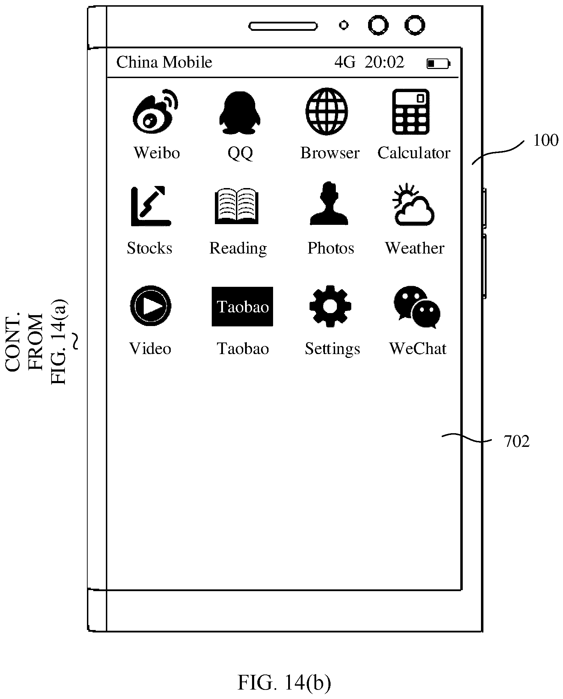

FIG. 14(a) and FIG. 14(b) are a schematic scenario diagram 8 of a display method for an electronic device with a flexible display according to an embodiment of this application;

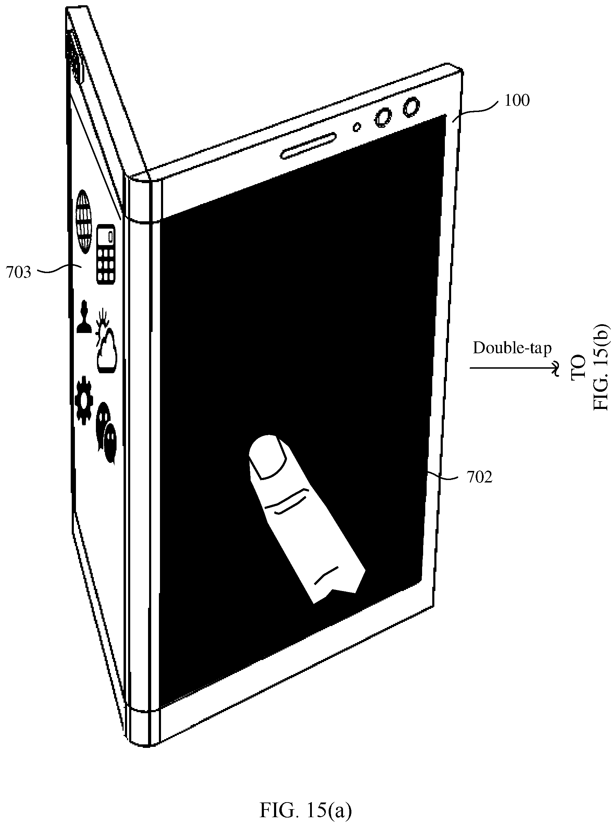

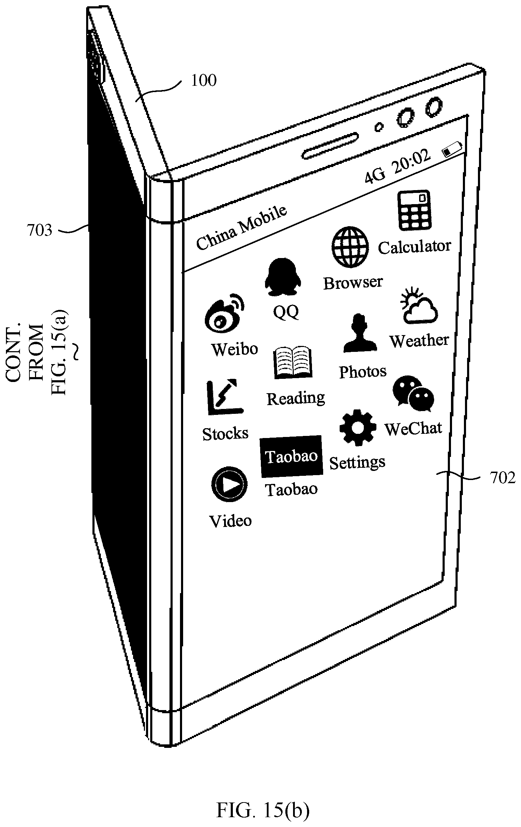

FIG. 15(a) and FIG. 15(b) are a schematic scenario diagram 9 of a display method for an electronic device with a flexible display according to an embodiment of this application;

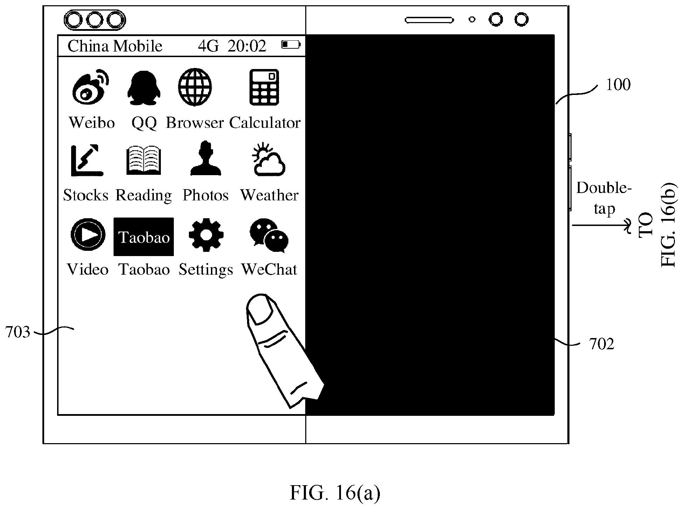

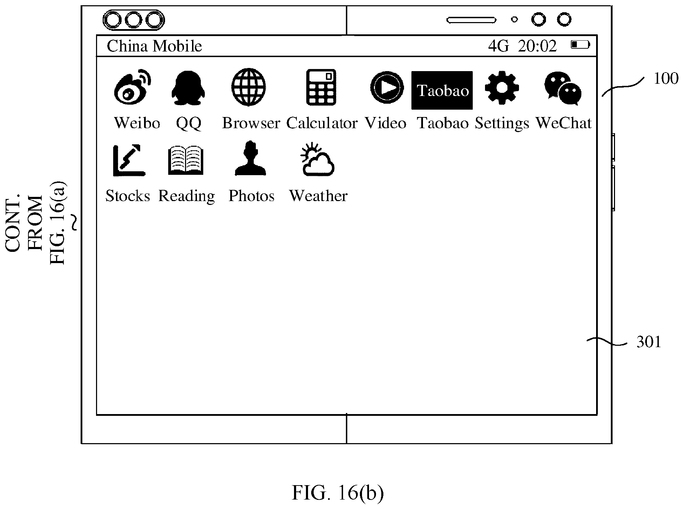

FIG. 16(a) and FIG. 16(b) are a schematic scenario diagram 10 of a display method for an electronic device with a flexible display according to an embodiment of this application;

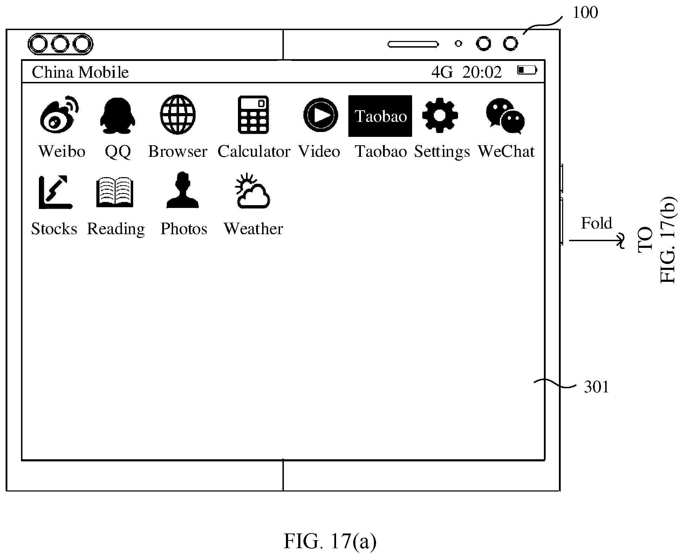

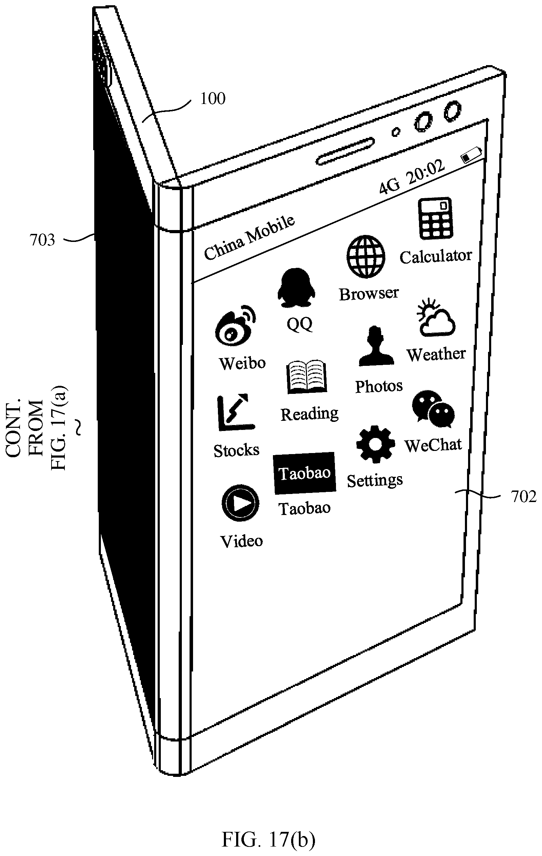

FIG. 17(a) and FIG. 17(b) are a schematic scenario diagram 11 of a display method for an electronic device with a flexible display according to an embodiment of this application;

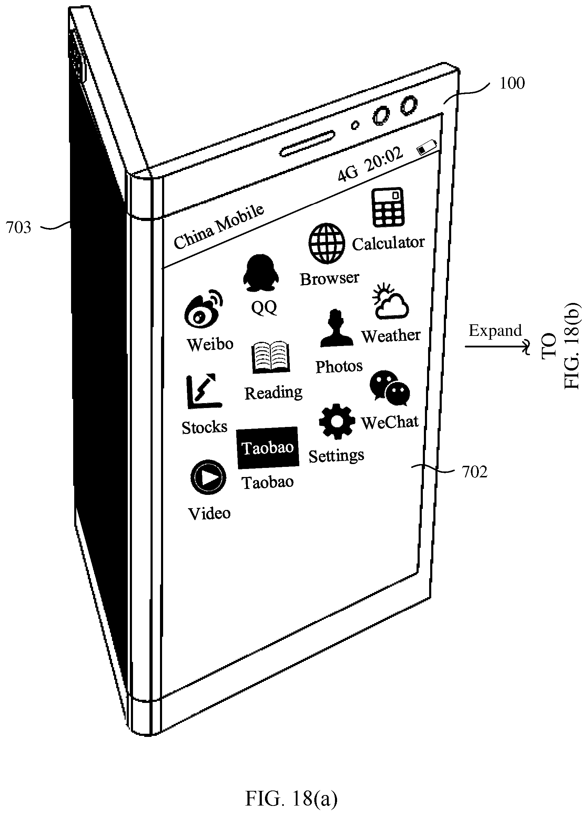

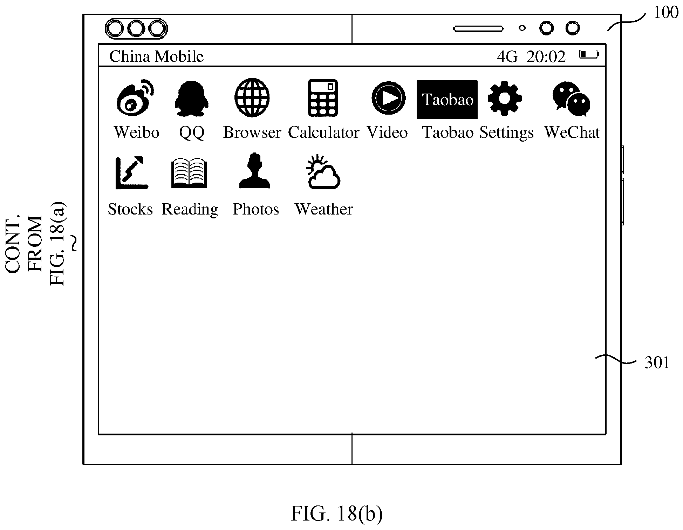

FIG. 18(a) and FIG. 18(b) are a schematic scenario diagram 12 of a display method for an electronic device with a flexible display according to an embodiment of this application;

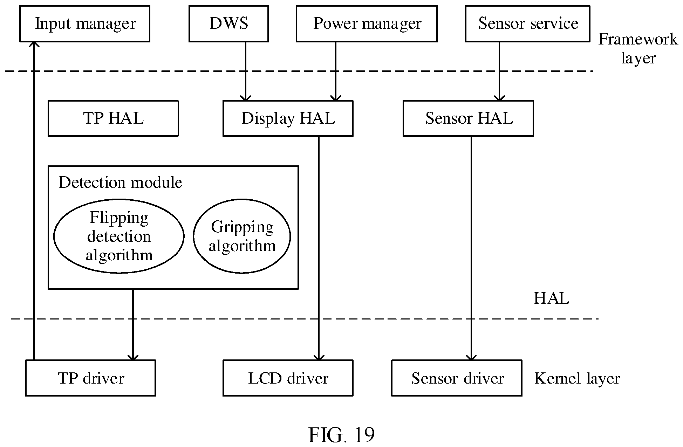

FIG. 19 is a schematic architectural diagram 4 of an operating system in an electronic device according to an embodiment of this application;

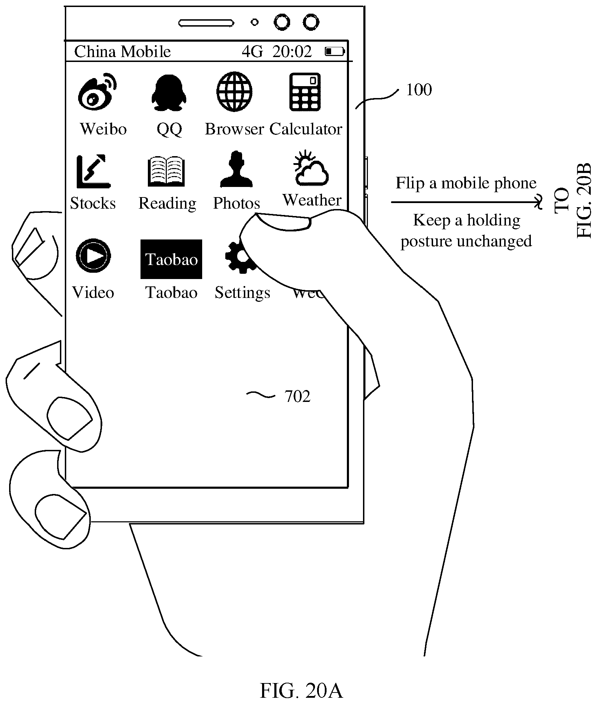

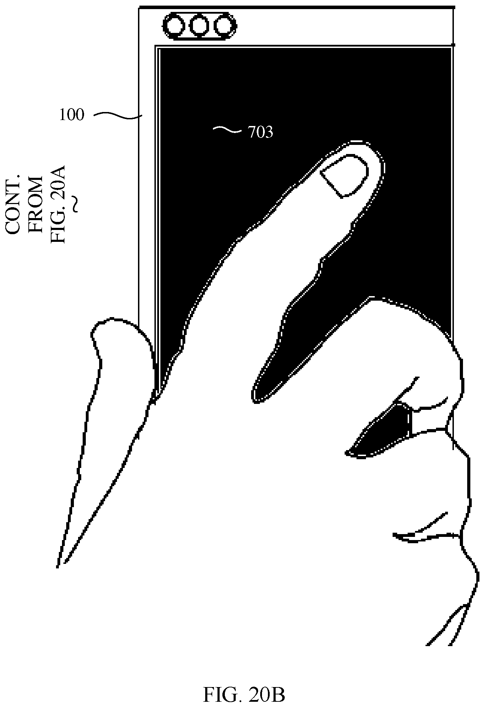

FIG. 20A and FIG. 20B are a schematic scenario diagram 13 of a display method for an electronic device with a flexible display according to an embodiment of this application;

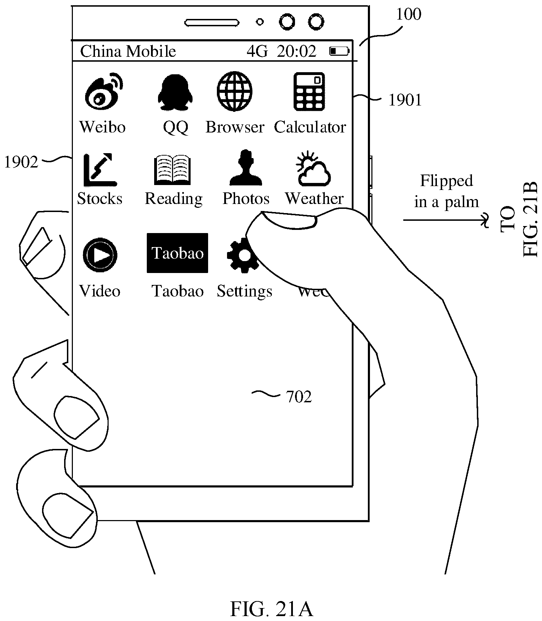

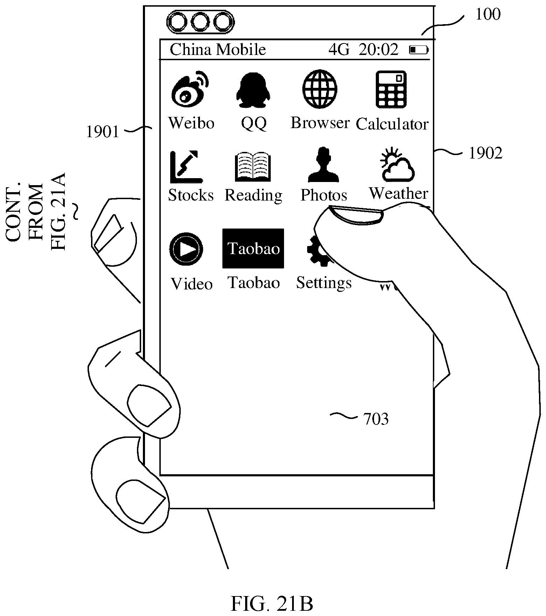

FIG. 21A and FIG. 21B are a schematic scenario diagram 14 of a display method for an electronic device with a flexible display according to an embodiment of this application; and

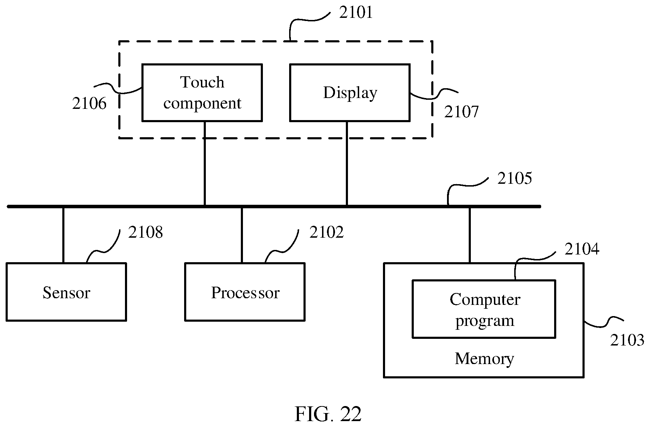

FIG. 22 is a schematic structural diagram 7 of an electronic device according to an embodiment of this application.

### DESCRIPTION OF EMBODIMENTS

The following describes the implementations of this embodiment in detail with reference to accompanying drawings.

A display method for an electronic device with a flexible display provided in the embodiments of this application can be applied to an electronic device with a flexible display, such as a mobile phone, a tablet computer, a notebook computer, an ultra-mobile personal computer (ultra-mobile personal computer, UMPC), a handheld computer, a netbook, a personal digital assistant (personal digital assistant, PDA), a wearable device, or a virtual reality device. This is not limited in the embodiments of this application.

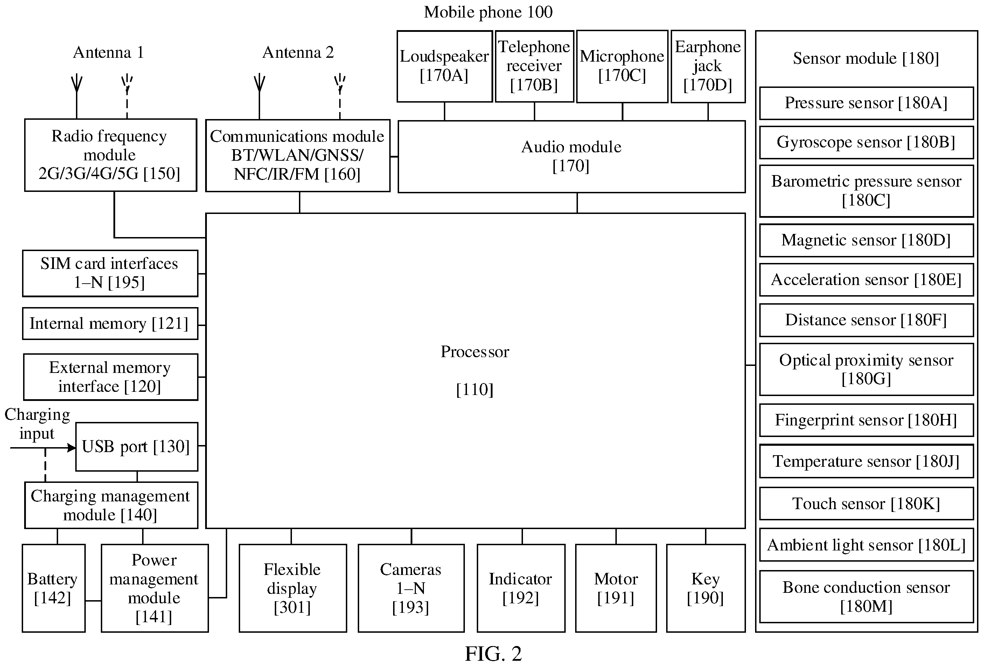

Using an example in which a mobile phone 100 is the foregoing electronic device, FIG. 2 is a schematic structural diagram of the mobile phone.

The mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a radio frequency module 150, a communications module 160, an audio module 170, a loudspeaker 170A, a telephone receiver 170B, a microphone 170C, an earphone jack 170D, a sensor module 180, a button 190, a motor 191, an indicator 192, a camera 193, a flexible display 301, a subscriber identification module (subscriber identification module, SIM) card interface 195, and the like.

It can be understood that the structure illustrated in this embodiment of this application does not constitute any specific limitation on the mobile phone 100. In some other embodiments of this application, the mobile phone 100 may include more or fewer components than those shown in the figure, a combination of some components, splitting of some components, or a different arrangement of the components. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the mobile phone 100. The controller may generate an operation control signal based on instruction operation code and a sequence signal, to control instruction fetching and instruction execution.

The processor 110 may further be provided with a memory, configured to store instructions and data. In some embodiments, the memory in the processor 110 is a cache memory. The memory may store instructions or data recently used or cyclically used by the processor 110. If the processor 110 needs to use the instructions or data again, the processor 110 may directly invoke the instructions or data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (derail clock line, SCL). In some embodiments, the processor 110 may include a plurality of I2C buses. The processor 110 may be separately coupled to a touch sensor 180K, a charger, a flashlight, the camera 193, and the like through different I2C bus interfaces. For example, the processor 110 may be coupled to the touch sensor 180K through an I2C interface, so that the processor 110 communicates with the touch sensor 180K through the I2C bus interface, to implement a touch function of the mobile phone 100.

The I2S interface may be used for audio communication. In some embodiments, the processor 110 may include a plurality of I2S buses. The processor 110 may be coupled to the audio module 170 through an I2S bus, to implement communication between the processor 110 and the audio module 170. In some embodiments, the audio module 170 may transfer an audio signal to the communications module 160 through an I2S interface, to implement a function of answering a call by using a Bluetooth headset.

The PCM interface may also be used for audio communication, to perform sampling, quantization, and encoding on an analog signal. In some embodiments, the audio module 170 may be coupled to the communications module 160 through the PCM bus interface. In some embodiments, the audio module 170 may alternatively transfer an audio signal to the communications module 160 through the PCM interface, to implement a function of answering a call by using a Bluetooth headset. Both the I2S interface and the PCM interface may be used for audio communication.

The UART interface is a universal serial data bus for asynchronous communication. The bus is a two-way communications bus, that converts to-be-transmitted data between serial communication and parallel communication. In some embodiments, the UART interface is usually configured to connect the processor 110 to the communications module 160. For example, the processor 110 communicates with a Bluetooth module in the communications module 160 through the UART interface, to implement a Bluetooth function. In some embodiments, the audio module 170 may transfer an audio signal to the communications module 160 through the UART interface, to implement a function of playing music by using a Bluetooth headset.

The MIPI interface may be configured to connect the processor 110 to peripheral components such as the flexible display 301 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the mobile phone 100. The processor 110 communicates with the flexible display 301 through the DSI interface, to implement a display function of the mobile phone 100.

The GPIO interface may be configured by using software. The GPIO interface may be configured as a control signal, or may be configured as a data signal. In some embodiments, the GPIO interface may be configured to connect the processor 110 to the camera 193, the flexible display 301, the communications module 160, the audio module 170, the sensor module 180, and the like. The GPIO interface may further be configured as an I2C interface, an I2S interface, a UART interface, a MIPI interface, or the like.

The USB port 130 is a port complying with the USB standard specification, and may be specifically a mini USB port, a micro USB port, a USB type C port, or the like. The USB port 130 may be configured to connect to the charger to charge the mobile phone 100, may also be configured to transmit data between the mobile phone 100 and a peripheral device, and may also be configured to connect to an earphone to play audio through the earphone. The port may further be configured to connect to another electronic device such as an AR device.

It can be understood that interface connection relationships between the modules that are described in this embodiment of this application are merely examples for description, and do not constitute any limitation on a structure of the mobile phone 100. In some other embodiments of this application, alternatively, the mobile phone 100 may use interface connection manners different from those in this embodiment or use a combination of a plurality of interface connection manners.

The charging management module 140 is configured to receive a charging input from the charger. The charger may be a wireless charger or a wired charger. In some wired charging embodiments, the charging management module 140 may receive a charging input from a wired charger through the USB port 130. In some wireless charging embodiments, the charging management module 140 may receive a wireless charging input through a wireless charging coil of the mobile phone 100. The charging management module 140 may further supply power to the electronic device through the power management module 141 while charging the battery 142.

The power management module 141 is configured to connect to the battery 142, the charging management module 140, and the processor 110. The power management module 141 receives an input from the battery 142 and/or an input from the charging management module 140, to supply power to the processor 110, the internal memory 121, an external memory, the flexible display 301, the camera 193, the communications module 160, and the like. The power management module 141 may further be configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the mobile phone 100 may be implemented by using the antenna 1, the antenna 2, the radio frequency module 150, the communications module 160, the modem processor, the baseband processor, and the like.

The antenna 1 and the antenna 2 are configured to transmit and receive electromagnetic wave signals. Each antenna in the mobile phone 100 may be configured to cover one or more communication frequency bands. Different antennas may be multiplexed to improve antenna utilization. For example, the antenna 1 may be multiplexed into a diversity antenna of a wireless local area network. In some other embodiments, an antenna may be used in combination with a tuning switch.

The radio frequency module 150 may provide wireless communication solutions, including 2G, 3G, 4G, 5G, and the like, applied to the mobile phone 100. The radio frequency module 150 may include at least one filter, a switch, a power amplifier, a low noise amplifier (low noise amplifier, LNA), and the like. The radio frequency module 150 may receive an electromagnetic wave through the antenna 1; perform filtering, amplification, and other processing on the received electromagnetic wave; and transfer a processed electromagnetic wave to the modem processor for demodulation. The radio frequency module 150 may further amplify a signal modulated by the modem processor, convert an amplified signal into an electromagnetic wave by using the antenna 1, and radiate the electromagnetic wave through the antenna 1. In some embodiments, at least some function modules of the radio frequency module 150 may be disposed in the processor 110. In some embodiments, at least some function modules of the radio frequency module 150 may be disposed in a same component as at least some modules of the processor 110.

The modem processor may include a modulator and a demodulator. The modulator is configured to modulate a to-be-sent low-frequency baseband signal into a medium/high frequency signal. The demodulator is configured to demodulate a received electromagnetic wave signal into a low frequency baseband signal. Then, the demodulator transfers the low frequency baseband signal obtained through demodulation to the baseband processor for processing. After the low frequency baseband signal is processed by the baseband processor, a processed low frequency baseband signal is transferred to the application processor. The application processor outputs a sound signal by using an audio device (which is not limited to the loudspeaker 170A and the telephone receiver 170B), or displays an image or a video by using the flexible display 301. In some embodiments, the modem processor may be an independent device. In some other embodiments, the modem processor may be independent of the processor 110, and is disposed in a same component as the radio frequency module 150 or another function module.

The communications module 160 may provide wireless communication solutions applied to the mobile phone 100, for example, wireless local area network (wireless local area networks, WLAN) (such as a wireless fidelity (wireless fidelity, Wi-Fi) network), Bluetooth (Bluetooth, BT), global navigation satellite system (global navigation satellite system, GNSS), frequency modulation (frequency modulation, FM), near field communication (near field communication, NFC), and infrared (infrared, IR) technologies. The communications module 160 may be one or more components integrated with at least one communications processing module. The communications module 160 receives an electromagnetic wave through the antenna 2, performs frequency modulation and filtering processing on the electromagnetic wave signal, and sends a processed signal to the processor 110. The communications module 160 may further receive a to-be-sent signal from the processor 110, perform frequency modulation and amplification on the to-be-sent signal, convert a processed to-be-sent signal into an electromagnetic wave by using the antenna 2, and radiate the electromagnetic wave through the antenna 2.

In some embodiments, in the mobile phone 100, the antenna 1 is coupled to the radio frequency module 150, and the antenna 2 is coupled to the communications module 160, so that the mobile phone 100 can communicate with a network and another device by using a wireless communications technology. The wireless communications technology may include global system for mobile communications (global system for mobile communications, GSM), general packet radio service (general packet radio service, GPRS), code division multiple access (code division multiple access, CDMA), wideband code division multiple access (wideband code division multiple access, WCDMA), time division-synchronous code division multiple access (time-division code division multiple access, TD-SCDMA), long term evolution (long term evolution, LTE), BT, GNSS, WLAN, NFC, FM, IR, and/or other technologies. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite based augmentation systems, SBAS).

The mobile phone 100 implements a display function by using the GPU, the flexible display 301, the application processor, and the like. The GPU is a microprocessor for image processing, and is connected to the flexible display 301 and the application processor. The GPU is configured to perform mathematical and geometric calculation, and is configured to perform graphics rendering. The processor 110 may include one or more GPUs, and execute a program instruction to generate or change display information. In this embodiment of this application, the flexible display 301 may include a display and a touch component. The display is configured to output displayed content to a user, and the touch component is configured to receive a touch event input by the user on the flexible display 301.

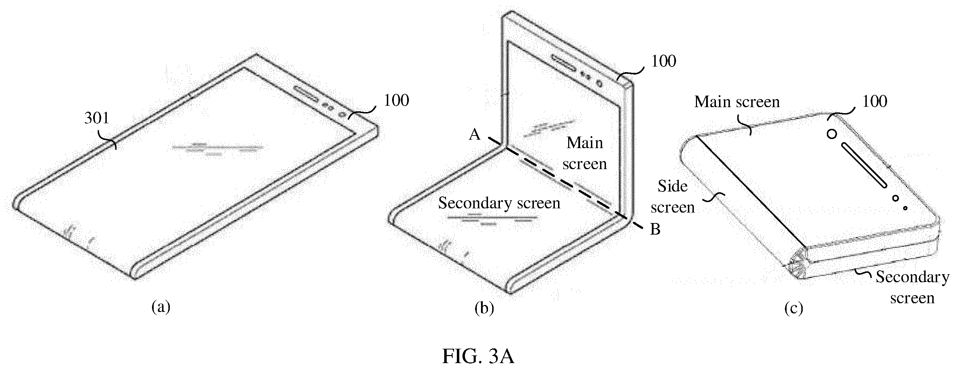

As shown in (a) in FIG. 3A, a flexible display 301 in an expanded state may be used as a complete display region for display. A user may fold the screen along one or more fold lines on the flexible display 301. A location of the fold line may be preset, or may be arbitrarily selected by the user on the flexible display 301.

As shown in (b) in FIG. 3A, after the user folds the flexible display 301 along a fold line AB on the flexible display 301, the flexible display 301 may be divided into two display regions, namely a display region 1 and a display region 2, along the fold line AB. In this embodiment of this application, the display region 1 and the display region 2 formed after folding may be used as two independent display regions for display. For example, the display region 1 may be referred to as a main screen of a mobile phone 100, and the display region 2 may be referred to as a secondary screen of the mobile phone 100. Display areas of the main screen and the secondary screen may be identical or different.

It should be noted that, after the user folds the flexible display 301 along the fold line AB, the main screen and the secondary screen may be disposed opposite to each other, or the main screen and the secondary screen may be away from each other. As shown in (c) in FIG. 3A, after the user folds the flexible display 301, the main screen and the secondary screen are away from each other. In this case, both the main screen and the secondary screen are exposed in an external environment, and the user may use the main screen for display, or may use the secondary screen for display.

In some embodiments, as shown in (c) in FIG. 3A, after the user folds the flexible display 301, a screen corresponding to a bent part (which may also be referred to as a side screen) may also be used as an independent display region. In this case, the flexible display 301 is divided into three independent display regions: a main screen, a secondary screen, and a side screen.

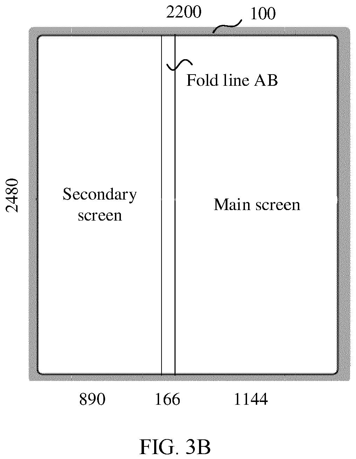

For example, as shown in FIG. 3B, a size of a flexible display 301 is 2200×2480 (measured in pixels). A width of a fold line AB on the flexible display 301 is 166. After the flexible display 301 is folded along the fold line AB, the flexible display 301 is divided, where a region whose size is 1144×2480 and that is located on a right side of the flexible display 301 is a main screen, and a region whose size is 890×2480 and that is located on a left side of the flexible display 301 is a secondary screen. In this case, the fold line AB whose size is 166×2480 can be used as a side screen. It should be understood that the fold line in this specification is merely used for ease of understanding, and the fold line may alternatively be a fold region, a boundary line, a boundary region, or the like. This is not limited in this specification.

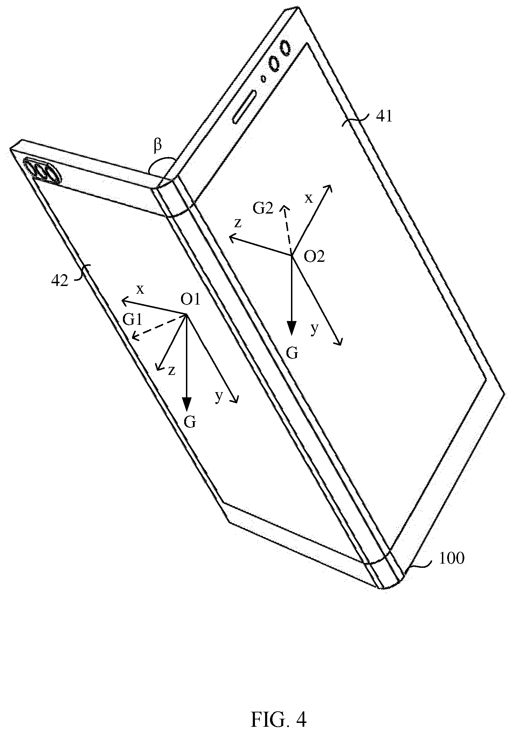

Referring to FIG. 4, after a user folds a flexible display 301, there is a specific included angle between a main screen and a secondary screen that are obtained through division. In this embodiment of this application, a mobile phone 100 may calculate the included angle between the main screen and the secondary screen by using data detected by one or more sensors. For example, a gyroscope and an acceleration sensor may be disposed in each of the main screen 41 and the secondary screen 42 of the mobile phone 100. The gyroscope in the main screen 41 may detect a rotational angular velocity at which the main screen 41 rotates, and the acceleration sensor in the main screen 41 may detect an acceleration generated when the main screen 41 moves. Further, the mobile phone 100 may determine a magnitude and a direction of gravity G based on data detected by the gyroscope and the acceleration sensor in the main screen 41. Similarly, the mobile phone 100 may also determine a magnitude and a direction of gravity G based on data detected by the gyroscope and the acceleration sensor in the secondary screen 42. Alternatively, if a magnitude and a direction of gravity G can be detected by using a sensor A, the sensor A may be disposed in each of the main screen 41 and the secondary screen 42. For example, a gyroscope and an acceleration sensor may be integrated as a sensor, and the sensor is disposed in each of the main screen 41 and the secondary screen 42.

In addition, as shown in FIG. 4, a corresponding coordinate system may be set up on each of the main screen 41 and the secondary screen 42. For example, a Cartesian coordinate system O1 may be set up on the secondary screen 42. In the Cartesian coordinate system O1, an x axis is parallel to a shorter side edge of the secondary screen 42, a y axis is parallel to a longer side edge of the secondary screen 42, and a z axis is perpendicular to a plane formed by the x axis and the y axis and points out of the secondary screen 42. Similarly, a Cartesian coordinate system O2 may be set up on the main screen 41. In the Cartesian coordinate system O2, an x axis is parallel to a shorter side edge of the main screen 41, a y axis is parallel to a longer side edge of the main screen 41, and a z axis is perpendicular to a plane formed by the x axis and the y axis and points into the main screen 41.

For example, the gyroscope and the acceleration sensor in the secondary screen 42 may detect the magnitude and the direction of the gravity G by using the Cartesian coordinate system O1, and the gyroscope and the acceleration sensor in the main screen 41 may detect the magnitude and the direction of the gravity G by using the Cartesian coordinate system O2. Because a pointing direction of the y axis in the Cartesian coordinate system O1 is the same as that in the Cartesian coordinate system O2, a component G1 of the gravity G on a plane formed by the x axis and z axis in the Cartesian coordinate system O1 and a component G2 of the gravity G on a plane formed by the x axis and z axis in the Cartesian coordinate system O2 have a same magnitude but have different directions. In this case, an included angle between the component G1 and the component G2 is an included angle between the Cartesian coordinate system O1 and the Cartesian coordinate system O2, and is also an included angle β between the secondary screen 42 and the main screen 41.

Therefore, the mobile phone 100 may obtain the included angle β between the secondary screen 42 and the main screen 41 by calculating the included angle between the component G1 of the gravity G in the Cartesian coordinate system O1 and the component G2 of the gravity G in the Cartesian coordinate system O2. It can be understood that the included angle β between the main screen 41 and the secondary screen 42 falls within a closed interval including 0° to 180°.

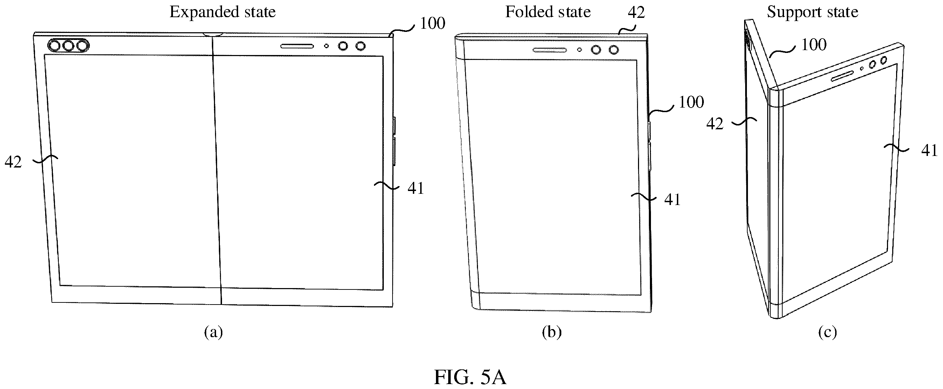

For example, as shown in (a) in FIG. 5A, when an included angle β between a main screen 41 and a secondary screen 42 is greater than a first threshold (for example, 170°), the mobile phone 100 may determine that the flexible display 301 is in an expanded state. As shown in (b) in FIG. 5A, when an included angle β between the main screen 41 and the secondary screen 42 is less than a second threshold (for example, 20°), the mobile phone 100 may determine that the flexible display 301 is in a folded state. Alternatively, as shown in (c) in FIG. 5A, when an included angle β between the main screen 41 and the secondary screen 42 falls within a preset interval (for example, 40° to 60°), the mobile phone 100 may determine that the flexible display 301 is in a support state. In this embodiment of this application, physical forms of the flexible display 301 may be divided into an expanded state and a non-expanded state, and all physical forms of the flexible display 301 except the expanded state may be referred to as the non-expanded state. For example, both the support state and the folded state belong to the non-expanded state.

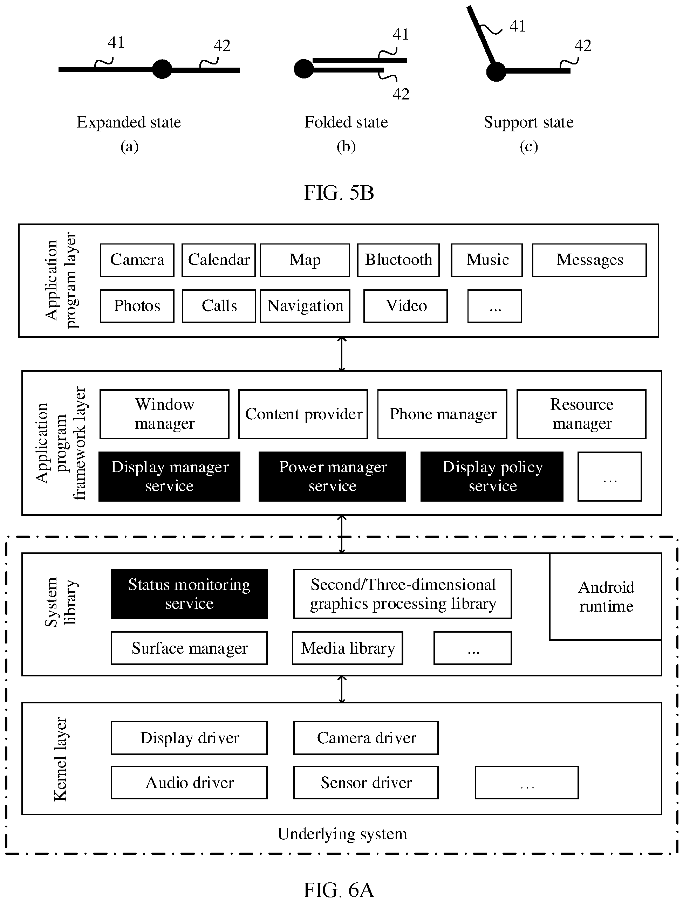

Correspondingly, as shown in (a) in FIG. 5B, when an included angle β between a main screen 41 and a secondary screen 42 is greater than the first threshold (for example, 170°), the mobile phone 100 may determine that the flexible display 301 is in an expanded state. As shown in (b) in FIG. 5B, when an included angle β between the main screen 41 and the secondary screen 42 is less than the second threshold (for example, 20°), the mobile phone 100 may determine that the flexible display 301 is in a folded state. Alternatively, as shown in (c) in FIG. 5B, when an included angle β between the main screen 41 and the secondary screen 42 falls within the preset interval (for example, 40° to 60°), the mobile phone 100 may determine that the flexible display 301 is in a support state.

In this embodiment of this application, when the mobile phone 100 needs to light up (which may also be referred to as "wake up") the flexible display 301 in a black screen (or screen-off) state, the mobile phone 100 may determine a specific physical form of the flexible display 301 based on an included angle between the main screen 41 and the secondary screen 42. Further, the mobile phone 100 may determine, based on the physical form of the flexible display 301, a specific screen to be lit up. For example, when the flexible display 301 is in an expanded state, the mobile phone 100 may light up the main screen 41 and the secondary screen 42 as a complete display screen. When the flexible display 301 is in a folded state or a support state, the mobile phone 100 may light up either the main screen 41 or the secondary screen 42. For example, the mobile phone 100 may light up a screen that is closer to a user. In this way, when the flexible display 301 is in different physical forms, the mobile phone 100 can light up a screen at a corresponding location when waking up the display screen, so that the user can obtain relatively desirable viewing and operation experience when folding or expanding the flexible display 301.

Particularly, when detecting that the gravity G coincides with the y axes in the Cartesian coordinate system O1 and the Cartesian coordinate system O2, the mobile phone 100 may, by default, light up the entire flexible display 301 or light up the main screen 41 or the secondary screen 42 of the flexible display 301. This is not limited in this embodiment of this application.

The sensor module 180 may include one or more of a gyroscope, an acceleration sensor, a pressure sensor, a barometric pressure sensor, a magnetic sensor (for example, a Hall effect sensor), a distance sensor, an optical proximity sensor, a fingerprint sensor, a temperature sensor, a touch sensor, a pyroelectric infrared sensor, an ambient light sensor, a bone conduction sensor, or the like. This is not limited in this embodiment of this application.

The mobile phone 100 may implement a photographing function by using the ISP, the camera 193, the video codec, the GPU, the flexible display 301, the application processor, and the like.

The ISP is configured to process data fed back by the camera 193. For example, during photographing, after a shutter is opened, light is transferred to a photosensitive element of the camera through a lens, an optical signal is converted into an electrical signal, and the photosensitive element of the camera transfers the electrical signal to the ISP for processing, to convert the electrical signal into an image visible to naked eye. The ISP may further perform algorithm-based optimization on the image in terms of noise, brightness, and skin color. The ISP may further optimize parameters such as an exposure and a color temperature in a photographing scenario. In some embodiments, the ISP may be disposed in the camera 193.

The camera 193 is configured to capture a static image or a video. An optical image of an object is generated through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP for converting the electrical signal into a digital image signal. The ISP outputs the digital image signal to the DSP for processing. The DSP converts the digital image signal into an image signal in a standard RGB or YUV format or the like. In some embodiments, the mobile phone 100 may include one or N cameras 193, where N is a positive integer greater than 1.

The digital signal processor is configured to process a digital signal. The digital signal processor not only can process the digital image signal, but also can process other digital signals. For example, when the mobile phone 100 selects a frequency, the digital signal processor is configured to perform Fourier transformation on frequency energy, and the like.

The video codec is configured to compress or decompress a digital video. The mobile phone 100 can support one or more types of video codecs. In this way, the mobile phone 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor that rapidly processes input information by using a biological neural network structure, for example, by using a mode of transfer between human brain neurons, and may further perform continuous self-learning. Applications such as intelligent cognition of the mobile phone 100, for example, image recognition, facial recognition, voice recognition, and text understanding, can be implemented by using the NPU.

The external memory interface 120 may be configured to connect to an external memory card, for example, a micro SD card, to expand a storage capability of the mobile phone 100. The external memory card communicates with the processor 110 through the external memory interface 120, to implement a data storage function, for example, to store music, video, and other files in the external memory card.

The internal memory 121 may be configured to store computer executable program code, where the executable program code includes instructions. The processor 110 performs various function applications and data processing of the mobile phone 100 by running the instructions stored in the internal memory 121. The internal memory 121 may include a program storage region and a data storage region. The program storage region may store an operating system, an application program required by at least one function (for example, a voice playback function or an image playback function), and the like. The data storage region may store data (such as audio data and a phone book) created during use of the mobile phone 100, and the like. In addition, the internal memory 121 may include a high-speed random access memory, and may further include a non-volatile memory such as at least one magnetic disk storage device, a flash memory device, or a universal flash storage (universal flash storage, UFS).

The mobile phone 100 may implement an audio function, such as music playing or recording, by using the audio module 170, the loudspeaker 170A, the telephone receiver 170B, the microphone 170C, the earphone jack 170D, the application processor, and the like.

The audio module 170 is configured to convert digital audio information into an analog audio signal output, and is also configured to convert an analog audio input into a digital audio signal. The audio module 170 may further be configured to encode and decode audio signals. In some embodiments, the audio module 170 may be disposed in the processor 110, or some function modules of the audio module 170 are disposed in the processor 110.

The loudspeaker 170A, also referred to as a "speaker", is configured to convert an audio electrical signal into a sound signal. The mobile phone 100 may be used for listening to music or answering a hands-free call by using the loudspeaker 170A.

The telephone receiver 170B, also referred to as an "earpiece", is configured to convert an audio electrical signal into a sound signal. When a call or voice information is received on the mobile phone 100, voice can be heard by putting the telephone receiver 170B near a human ear.

The microphone 170C, also referred to as a "mic" or a "mike", is configured to convert a sound signal into an electrical signal. When making a call or sending voice information, a user may put the microphone 170C near the mouth and speak, to input a sound signal into the microphone 170C. The mobile phone 100 may be provided with at least one microphone 170C. In some other embodiments, the mobile phone 100 may be provided with two microphones 170C, which may further implement a noise canceling function in addition to sound signal collection. In some other embodiments, the mobile phone 100 may alternatively be provided with three, four, or more microphones 170 C, which implement sound signal collection and noise canceling, and may further identify a sound source, to implement a directional recording function and the like.

The earphone jack 170D is configured to connect to a wired earphone. The earphone jack 170D may be a USB port 130, or may be a 3.5 mm open mobile terminal platform (open mobile terminal platform, OMTP) standard interface or a Cellular Telecommunications Industry Association of the USA (cellular telecommunications industry association of the USA, CTIA) standard interface.

The button 190 includes an on/off button, a volume button, and the like. The button 190 may be a mechanical button, or may be a touch button. The mobile phone 100 may receive a button input, and generate a button signal input related to a user setting and function control of the mobile phone 100.

The motor 191 may generate a vibration alert. The motor 191 may be configured to provide an incoming call vibration alert and a touch vibration feedback. For example, touch operations performed on different applications (such as photographing and audio playback) may be corresponding to different vibration feedback effects. For touch operations performed in different regions of the flexible display 301, the motor 191 may also be corresponding to different vibration feedback effects. Different application scenarios (such as time reminding, information receiving, an alarm clock application, and a game application) may also be corresponding to different vibration feedback effects. A touch vibration feedback effect may also be customized.

The indicator 192 may be an indicator light, and may be configured to indicate a charging status and a battery level change, and may also be configured to indicate a message, a missed call, a notification, and the like.

The SIM card interface 195 is configured to connect to a SIM card. The SIM card may be inserted into the SIM card interface 195 or removed from the SIM card interface 195, to come into contact with or be separated from the mobile phone 100. The mobile phone 100 can support one or N SIM card interfaces, where N is a positive integer greater than 1. The SIM card interface 195 can support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external memory card. The mobile phone 100 interacts with a network by using a SIM card, to implement a call function, a data communication function, and the like. In some embodiments, the mobile phone 100 uses an eSIM, that is, an embedded SIM card. The eSIM card may be embedded in the mobile phone 100 and cannot be separated from the mobile phone 100.

A software system of the mobile phone 100 may use a layered architecture, an event driven architecture, a microkernel architecture, a microservices-based architecture, or a cloud architecture. In this embodiment of this application, an Android system with a layered architecture is used as an example for describing a software structure of the mobile phone 100.

FIG. 6A is a block diagram of a software structure of a mobile phone 100 according to an embodiment of this application.

In the layered architecture, software is divided into several layers, and each layer has clear roles and tasks. The layers communicate with each other through a software interface. In some embodiments, the Android system is divided into four layers from top to bottom: an application program layer, an application program framework layer, an Android runtime (Android runtime) and a system library, and a kernel layer.

The application program layer may include a series of application program packages.

As shown in FIG. 6A, applications programs such as camera, photos, calendar, calls, maps, navigation, Bluetooth, music, video, or SMS messages may be installed at the application program layer.

The application program framework layer provides an application programming interface (application programming interface, API) and a programming framework for an application program at the application program layer. The application program framework layer includes some predefined functions.

As shown in FIG. 6A, the application program framework layer may include a display policy service, a power manager service (power manager service, PMS), and a display manager service (display manager service, DMS). Certainly, the application program framework layer may further include an activity manager, a window manager, a content provider, a view system, a phone manager, a resource manager, a notification manager, and the like. This is not limited in this embodiment of this application.

The display policy service may be configured to obtain a current specific physical form of a flexible display from an underlying display system. Further, the display policy service may determine, based on the specific physical form of the flexible display, a specific screen that needs to be woken up currently, that is, a specific display mode currently used for display. For example, the display mode may include a main-screen display mode, a secondary-screen display mode, a large-screen display mode, and the like. In the main-screen display mode, the mobile phone may perform display by using a main screen of the flexible display. In this case, a secondary screen may be in a black screen or screen-off state. In the secondary-screen display mode, the mobile phone may perform display by using the secondary screen of the flexible display. In this case, the main screen may be in a black screen or screen-off state. In the large-screen display mode, the mobile phone may perform display on the entire flexible display used as a complete display screen.

When the flexible display of the mobile phone is in a black screen (or screen-off) state, the mobile phone may receive a trigger operation used for waking up the display screen. For example, the trigger operation may be an operation performed by a user, such as an operation of pressing/tapping a power button (power), a hand raising operation, an operation of double tapping a screen, a floating touch operation, a fingerprint-based unlocking operation, or an operation of plugging/unplugging a USB data cable. After the trigger operation is received, an underlying system of the mobile phone may report a screen-on event to the power manager service. Further, the power manager service may learn, from the display policy service, a specific screen that needs to be woken up currently. For example, when the flexible display is in an expanded state, the display policy service may determine that a screen that needs to be lit up in this case is a large screen (that is, a large-screen display mode) including the main screen and the secondary screen. Further, the display policy service may indicate the power manager service to light up the large screen. In this way, by using the display manager service, the power manager service may wake up the large screen including the main screen and the secondary screen, and perform display on the large screen.

Still referring to FIG. 6A, the system library, the kernel layer, and the like below the application program framework layer may be referred to as an underlying system. The underlying system includes an underlying display system configured to provide a display service. For example, the underlying display system includes a display driver at the kernel layer, a surface manager in the system library, and the like. In addition, the underlying system in this application further includes a status monitoring service configured to identify a physical form change of the flexible display. The status monitoring service may be independently disposed in the underlying display system, or may be disposed in the system library and/or at the kernel layer.

For example, the status monitoring service may invoke a sensor service (sensor service) to start sensors such as a gyroscope and an acceleration sensor to perform detection. The status monitoring service may calculate a current included angle between the main screen and the secondary screen based on detection data reported by the sensors. In this way, the status monitoring service can determine, based on the included angle between the main screen and the secondary screen, that the flexible display is in a physical form such as an expanded state, a folded state, or a support state. In addition, the status monitoring service may report the determined physical form to the display policy service.

In some embodiments, when determining that the mobile phone is in a folded state or a support state currently, the status monitoring service may further start a sensor such as a camera, an infrared sensor, an optical proximity sensor, or a touch component (touch panel, TP) to identify a specific direction of the mobile phone. For example, the specific direction of the mobile phone may be as follows: The main screen faces a user or the secondary screen faces the user. For example, when the mobile phone is in a folded state and the main screen faces the user, the display policy service may determine the main screen as a screen that needs to be lit up; and when the mobile phone is in a folded state and the secondary screen faces the user, the display policy service may determine the secondary screen as a screen that needs to be lit up.

It should be understood that, that the main screen, the secondary screen, or the entire flexible display faces the user in this specification includes: The main screen, the secondary screen, or the entire flexible display faces the user basically in parallel with a face of the user, and the main screen, the secondary screen, or the entire flexible display faces the user at a specific tilt angle. In addition, that the main screen, the secondary screen, or the entire flexible display faces upward in this specification includes: The main screen, the secondary screen, or the entire flexible display faces upward at a horizontal angle, and the main screen, the secondary screen, or the entire flexible display faces upward at a specific angle on a horizontal plane.

It can be learned that when a display screen of the mobile phone is a flexible display, if the display screen needs to be woken up in a black screen or screen-off state, the mobile phone may light up a corresponding screen based on a current physical form of the flexible display. In this way, the flexible display can provide relatively desirable use experience for the user when being woken up in different physical forms. This avoids a phenomenon that only a part of the flexible display is lit up when the flexible display is in an expanded state or both a main screen and a secondary screen are lit up when the flexible display is in a folded state.

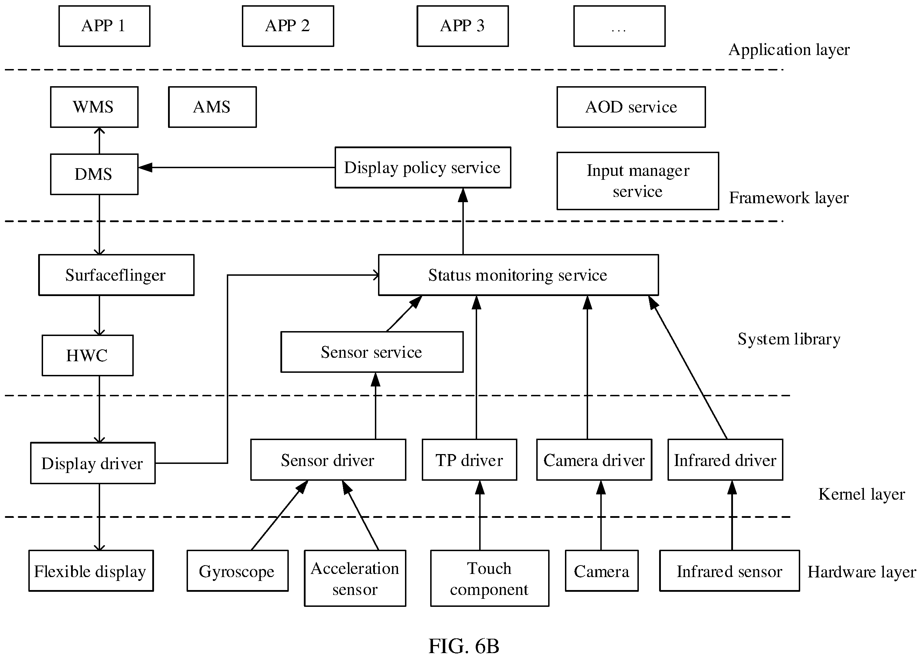

Similar to FIG. 6A, FIG. 6B is a schematic diagram of a data flow direction in an Android operating system. For example, a gyroscope and an acceleration sensor at a hardware layer may report detected data to a sensor driver, and the sensor driver reports, by using a sensor service, the data detected by the gyroscope and the acceleration sensor to a status monitoring service. The status monitoring service may determine an included angle between a main screen and a secondary screen based on the data detected by the gyroscope and the acceleration sensor, and then determines a physical form of a flexible display. In addition, a touch component may also report detected data to the status monitoring service by using a TP driver, a camera may report detected data to the status monitoring service by using a camera driver, and an infrared sensor may report detected data to the status monitoring service by using an infrared driver. The status monitoring service may determine a specific direction of a mobile phone based on the data reported by the touch component, the camera, or the infrared sensor. Further, the status monitoring service may report the determined specific direction of the mobile phone and the determined physical form of the flexible display to a display policy service, and the display policy service determines a screen that needs to be lit up currently. The display policy service may notify a display manager service (DMS) of a determined display mode. For example, the display mode is a large-screen display mode. The DMS may power on the entire flexible display by using a surfaceflinger and a display driver, and the DMS may indicate a window manager service (WMS) to create, on the flexible display, a corresponding window for display.

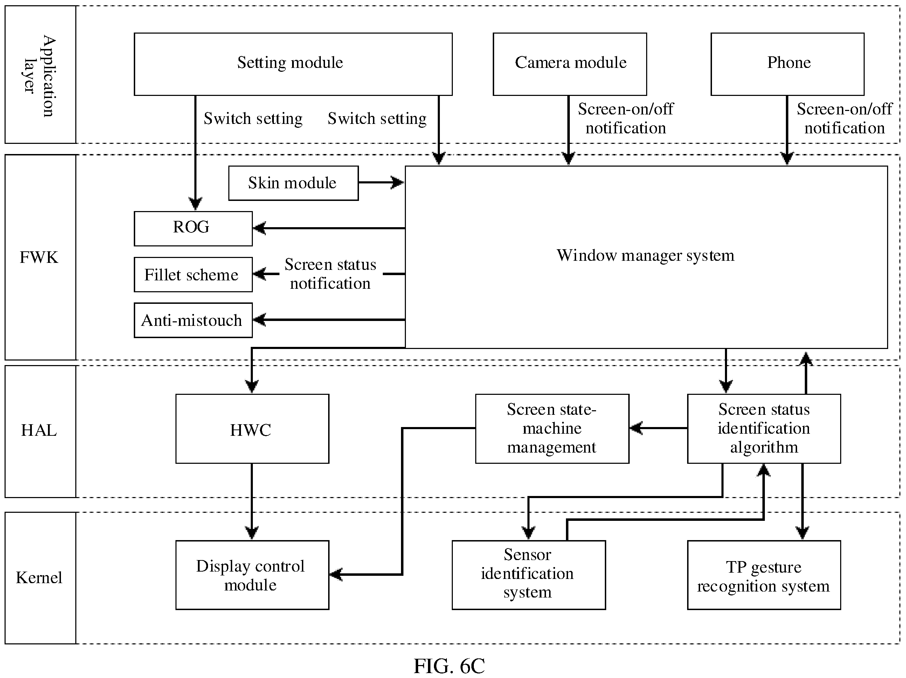

Similar to FIG. 6B, FIG. 6C is a schematic diagram of modules in an Android operating system. For example, the display policy service, the display manager service (DMS), and the window manager service (WMS) that are described above may be integrated as a window manager system shown in FIG. 6C. The status monitoring service described above may be specifically a screen adding and identification algorithm module shown in FIG. 6C. The sensors may be classified into a display control module, a sensor identification system, and a TP gesture recognition system based on functions. For a specific process of interaction between the modules, refer to the related descriptions in FIG. 6B. Therefore, details are not described herein again.

The Android runtime includes a core library and a virtual machine. The Android runtime is responsible for scheduling and management of the Android system.

The core library includes two parts: one part is a performance function that needs to be called by a java language, and the other part is an Android core library.

The application program layer and the application program framework layer run in the virtual machine. The virtual machine executes java files of the application program layer and the application program framework layer as binary files. The virtual machine is configured to implement functions such as object lifecycle management, stack management, thread management, security and exception management, and garbage collection.

The system library may include a plurality of function modules, such as a surface manager (surface manager), a media library (Media Libraries), a three-dimensional graphics processing library (for example, OpenGL ES), and a 2D graphics engine (for example, SGL). The surface manager is configured to manage a display subsystem, and fuse 2D and 3D layers for a plurality of application programs. The media library supports playback and recording of audio and videos in a plurality of commonly used formats, and supports a static image file and the like. The media library can support a plurality of audio and video encoding formats, such as MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer includes at least a display driver, a camera driver, an audio driver, a sensor driver, and the like. This is not limited in this embodiment of this application.

With reference to the accompanying drawings and by using an example in which a mobile phone is used as an electronic device, the following details a display method for an electronic device with a flexible display provided in the embodiments of this application.

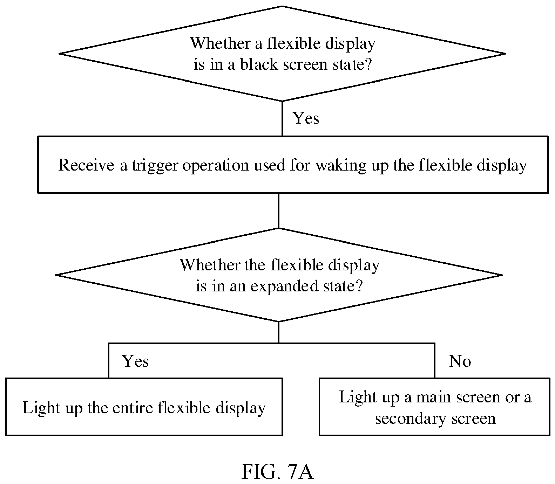

In this embodiment of this application, as shown in FIG. 7A, when a flexible display of the mobile phone is in a black screen (or screen-off) state, the mobile phone may receive a trigger operation used for waking up the flexible display. Further, the mobile phone may light up a corresponding screen based on a current specific physical form of the flexible display. When the flexible display is in an expanded state, the mobile phone may light up the entire flexible display in response to the trigger operation. When the flexible display is in a non-expanded state (for example, a folded state or a support state), the mobile phone may light up a main screen or a secondary screen in response to the trigger operation. For example, when the trigger operation is an operation of pressing/tapping a power button by a user, an operation of raising a hand by the user, an incoming call event, or a USB plugging/unplugging event, if the flexible display is in a non-expanded state, the mobile phone may light up, in response to the trigger operation, a screen currently facing the user. For another example, when the trigger operation is a preset gesture made by the user on the flexible display, if the flexible display is in a non-expanded state, the mobile phone may light up, in response to the trigger operation, the screen on which the preset gesture is made.

In this way, the mobile phone can intelligently adapt to a current physical form of the flexible display to wake up a corresponding screen in an appropriate display mode, without a need to manually set a display mode of the mobile phone by the user, thereby providing relatively desirable use experience for the user.

The following provides detailed descriptions with reference to a plurality of specific scenarios of waking up the flexible display.

### Scenario 1

In the scenario 1, when the flexible display is in a black screen (or screen-off) state, the user may wake up the flexible display of the mobile phone by pressing/tapping a power button. The power button of the mobile phone may be a physical button, or may be a virtual button. This is not limited in this embodiment of this application.

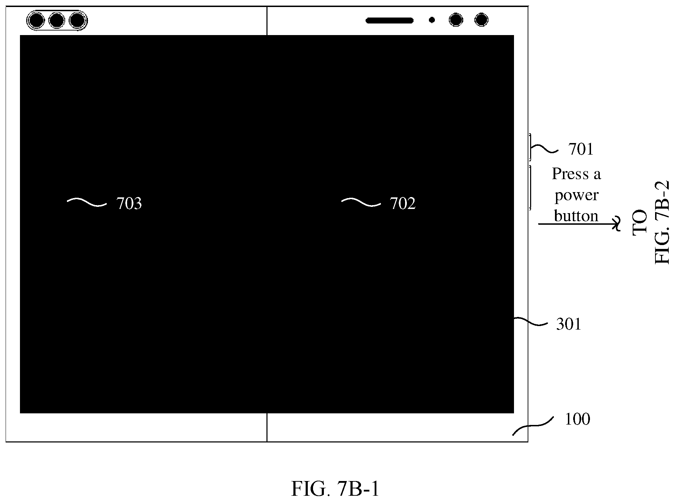

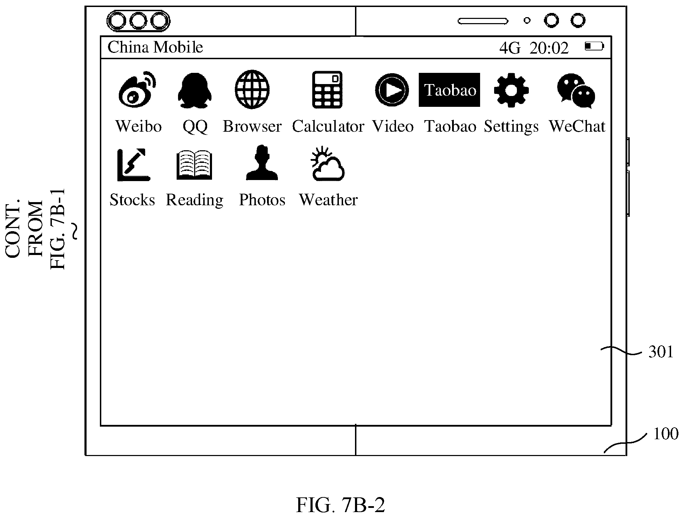

For example, as shown in FIG. 7B-1, a mobile phone includes a flexible display 301 and a power button 701, and the flexible display 301 may be divided into a main screen 702 and a secondary screen 703. When the flexible display 301 is in a black screen (or screen-off) state, if the power button 701 detects a tapping operation performed by a user, the power button 701 may report, in an interrupted form, a screen-on event to a power manager service (PMS) at an application program framework layer. After receiving the screen-on event, the power manager service may invoke a sensor service (sensor service) to start a sensor 1 corresponding to the main screen 702 and a sensor 2 corresponding to the secondary screen 703, to perform detection. For example, similar to the related descriptions in FIG. 4, the main screen 702 may start a gyroscope and an acceleration sensor in the main screen 702 to detect a component G2 of gravity G on a plane formed by an x axis and a z axis in a Cartesian coordinate system on the main screen 702, and the secondary screen 703 may start a gyroscope and an acceleration sensor in the secondary screen 703 to detect a component G1 of the gravity G on a plane formed by an x axis and a z axis in a Cartesian coordinate system on the secondary screen 703.

For example, the sensor 1 in the main screen 702 may report the detected component G2 to a status monitoring service in an underlying system. Similarly, the sensor 2 in the secondary screen 703 may also report the detected component G1 to the status monitoring service in the underlying system. In this way, the status monitoring service may calculate an included angle between the component G1 and the component G2 based on the two vectors: the component G1 and the component G2. The included angle is an included angle between the main screen 702 and the secondary screen 703. Still referring to FIG. 7B-1, if the included angle between the main screen 702 and the secondary screen 703 is greater than a first threshold (for example, the first threshold is 170°), the status monitoring service may determine that a current physical form of the flexible display 301 is an expanded state. In this case, the status monitoring service may report, to a display policy service at the application program framework layer, that the current physical form of the flexible display 301 is an expanded state.

Further, the display policy service may determine, based on the physical form of the flexible display 301, a screen that needs to be lit up currently. For example, when the flexible display 301 is in an expanded state, the display policy service may determine that the screen that needs to be lit up currently is the entire flexible display 301 (that is, a large screen) including the main screen 702 and the secondary screen 703. In this case, the display policy service may notify the power manager service that a current display mode is a large-screen display mode. In this case, as shown in FIG. 7B-2, the power manager service may invoke a corresponding interface (for example, a setPowerMode interface) to power on the entire flexible display 301, and perform display on the entire flexible display 301 by using the display manager service.

In this way, when the flexible display 301 is in an expanded state, if detecting that the user presses the power button to wake up the flexible display 301, the mobile phone can automatically light up the entire flexible display 301. This is convenient for the user to operate the mobile phone on the expanded flexible display 301, thereby improving use experience when the user uses the mobile phone with the flexible display.

In some other embodiments, as shown in FIG. 8(a), when the user presses the power button 701 when the flexible display 301 is in a black screen state, if the status monitoring service learns, through calculation, that an included angle between the main screen 702 and the secondary screen 703 (not shown in the figure) is less than a second threshold (for example, the second threshold is 15°), the status monitoring service may determine that a current physical form of the flexible display is a folded state. In this case, the status monitoring service may further invoke a sensor such as a camera, an infrared sensor, an optical proximity sensor, or a touch component to identify a specific direction of the mobile phone. It should be understood that the touch component in this specification and a display may be integrated into the flexible display, and the touch component keeps being connected to the display. Alternatively, the touch component may be independently disposed, and keeps being connected to the display of the flexible display.

For example, a camera may be installed in each of the main screen 702 and the secondary screen 703. If the camera in the main screen 702 captures face information, but the camera in the secondary screen 703 does not capture the face information, the status monitoring service may determine that the flexible display that is in a folded state currently is in a state in which the main screen 702 faces the user. It should be understood that, to reduce costs, alternatively, one camera may be disposed in the main screen 702 or the secondary screen 703. In this case, whether a screen (the main screen 702 or the secondary screen 703) in which no camera is disposed faces the user cannot be accurately detected.

For another example, an infrared sensor may be installed in each of the main screen 702 and the secondary screen 703. If the infrared sensor in the secondary screen 703 captures an infrared signal radiated by a human body, but the infrared sensor in the main screen 702 does not capture the infrared signal radiated by the human body, the status monitoring service may determine that the flexible display that is in a folded state currently is in a state in which the secondary screen 703 faces the user. It should be understood that, to reduce costs, alternatively, one infrared sensor may be disposed in the main screen 702 or the secondary screen 703. In this case, whether a screen (the main screen 702 or the secondary screen 703) in which no infrared sensor is disposed faces the user cannot be accurately detected. For another example, the mobile phone may further report a current touch location of the user by using the touch component. Further, a current posture of gripping the mobile phone by the user may be determined based on the touch location by using a preset gripping algorithm. In this case, the status monitoring service may also determine the specific direction of the mobile phone based on the posture of gripping the mobile phone. For example, after detecting a touch event, the touch component may report coordinates of a touch point to the status monitoring service. The status monitoring service determines, by collecting statics on a location of a touch point and a quantity of touch points on the touch component, a posture of gripping the mobile phone. For example, if it is detected that a quantity of touch points on the main screen 702 is greater than a preset value, it indicates that the user grips the main screen 702 with fingers and a palm. In this case, a screen currently facing the user is the secondary screen 703. Correspondingly, if it is detected that a quantity of the touch points on the secondary screen 703 is greater than the preset value, it indicates that the user grips the secondary screen 703 with the fingers and the palm. In this case, a screen currently facing the user is the main screen 702.

It should be noted that the mobile phone may identify a specific direction of the mobile phone by using the one or more sensors. For example, when identifying the gripping posture of the user by using the gripping algorithm, the mobile phone may start the cameras to detect whether face information is captured. If detecting that the quantity of touch points on the secondary screen 703 is greater than the preset value and that the camera in the main screen 702 captures the face information, the mobile phone may determine that a current gripping posture is a gripping posture that allows the main screen 702 to face the user.

Further, the status monitoring service may send, to the display policy service, the physical form (that is, a folded state) of the flexible display and the specific direction of the mobile phone that are currently identified. The display policy service may determine, based on the specific direction of the mobile phone, whether the main screen 702 or the secondary screen 703 of the mobile phone is to be lit up when the flexible display is in a folded state. As shown in FIG. 8(b), when the flexible display is in a folded state and the main screen 702 faces the user, the display policy service may determine that a screen that needs to be lit up currently is the main screen 702. In this case, the display policy service may notify the power manager service that a current display mode is a main-screen display mode. Further, the power manager service may invoke a corresponding interface to power on the main screen 702, and perform display on the main screen 702 by using the display manager service. Correspondingly, if the flexible display is in a folded state and the secondary screen 703 faces the user, the mobile phone can automatically light up the secondary screen 703 for display.

It should be noted that in this embodiment of this application, an example in which the mobile phone displays a desktop of the mobile phone after lighting up the flexible display is used for description. It can be understood that the mobile phone may also display a lock screen interface or a specific interface of an application (for example, WeChat or Weather) after lighting up the flexible display. This is not limited in this embodiment of this application.

In other words, when the flexible display is in a folded state, if detecting that the user presses the power button to wake up the flexible display, the mobile phone can automatically light up, based on a current direction of the mobile phone, a screen facing the user. This is convenient for the user to operate the mobile phone on the folded flexible display, thereby improving use experience when the user uses the mobile phone with the flexible display.

In some other embodiments, as shown in FIG. 9(a), when the user presses the power button 701 (not shown in the figure) when the flexible display 301 is in a black screen state, if the status monitoring service learns, through calculation, that an included angle between the main screen 702 and the secondary screen 703 falls within a preset range (for example, 40° to 60°), the status monitoring service may determine that a current physical form of the flexible display is a support state. In this case, similar to the case corresponding to the folded state, the status monitoring service may further invoke a sensor such as a camera, an infrared sensor, an optical proximity sensor, or a touch component to identify a specific direction of the mobile phone.

In this case, the status monitoring service may send, to the display policy service, the physical form (that is, the support state) of the flexible display and the specific direction of the mobile phone that are currently identified. The display policy service may determine, based on the specific direction of the mobile phone, whether the main screen 702 or the secondary screen 703 of the mobile phone is to be lit up when the flexible display is in the support state. As shown in FIG. 9(b), when the flexible display is in a support state and the main screen 702 faces the user, the display policy service may determine that a screen that needs to be lit up currently is the main screen 702. In this case, the display policy service may notify that a current display mode is a main-screen display mode. Further, the power manager service may invoke a corresponding interface to power on the main screen 702, and perform display on the main screen 702 by using the display manager service. Correspondingly, if the flexible display is in a support state, and the secondary screen 703 faces the user, the mobile phone can automatically light up the secondary screen 703 for display.

It should be noted that after identifying that the physical form of the flexible display is a folded state or a support state, the status monitoring service may invoke the sensor to identify the specific direction of the mobile phone. Alternatively, after receiving a screen-on event, the power manager service may invoke the sensor to identify the specific direction of the mobile phone. This is not limited in this embodiment of this application.

### Scenario 2

In the scenario 2, a magnetic field sensor, for example, a Hall (hall) effect sensor, may be disposed in the mobile phone. The magnetic field sensor may be used to detect whether the user has performed an expansion action on the flexible display. When the flexible display is in a black screen (or screen-off) state, if the flexible display of the mobile phone is in a folded state, the user may wake up the flexible display of the mobile phone by performing the trigger operation of expanding the flexible display.

For example, in a black screen (or screen-off) state, the mobile phone may set the Hall effect sensor to be in an "always on" (always on) state. As shown in FIG. 10(a), the mobile phone may detect, by using the Hall effect sensor, an expansion action performed on the flexible display 301. When detecting that an included angle between the main screen 702 and the secondary screen 703 of the flexible display 301 is greater than a first preset value (for example, 15°), the Hall effect sensor may report, in an interrupted form, a screen-on event to the power manager service (PMS) at the application program framework layer.

Similar to the waking up method in the scenario 1, after receiving the screen-on event, the power manager service may start the gyroscopes and the acceleration sensors in the main screen 702 and the secondary screen 703 to detect a specific included angle that is between the main screen 702 and the secondary screen 703 and that changes in real time. When the included angle between the main screen 702 and the secondary screen 703 is greater than a second preset value (for example, 170°), it indicates that the user is probably intended to expand the flexible display 301. In this case, the display policy service may determine that a screen that needs to be lit up currently is the entire flexible display 301 (that is, a large screen) including the main screen 702 and the secondary screen 703. Further, the display policy service may notify the power manager service that a current display mode is a large-screen display mode. In this case, as shown in FIG. 10(b), the power manager service may invoke a corresponding interface to power on the entire flexible display 301, and perform display on the entire flexible display 301 by using the display manager service.

In this way, in a black screen (or screen-off) state, the mobile phone may detect the operation of expanding the flexible display by the user, and the mobile phone can automatically light up the entire flexible display in response to the operation of expanding the flexible display by the user. This is convenient for the user to directly operate the mobile phone on the large screen after expanding the flexible display, and the user does not need to perform an operation, such as pressing the power button again after expanding the screen, to wake up the flexible display.

In addition, in the foregoing embodiment, in a process of expanding the flexible display, the mobile phone lights up the entire flexible display only after detecting that the included angle between the main screen and the secondary screen is greater than the second preset value; and the mobile phone does not need to light up the flexible display when the included angle between the main screen and the secondary screen does not reach the second preset value. This reduces power consumption required for waking up the screen of the mobile phone.

In some embodiments, after the power manager service receives a screen-on event, the mobile phone may further start timing. If it is not detected, within a preset time (for example, two seconds), that the included angle between the main screen 702 and the secondary screen 703 is greater than the second preset value, it indicates that currently, the user may not be intended to expand the folded screen. In this case, the mobile phone may start the gyroscopes and the acceleration sensors in the main screen 702 and the secondary screen 703, to keep in a black screen state, thereby reducing power consumption of the mobile phone.

It should be understood that the following two solutions may further be included.
(1) When detecting, by using the Hall effect sensor, that the included angle between the main screen and the secondary screen is greater than the first preset value (for example, the first preset value is 15°), the mobile phone determines an expansion action performed by the user on the flexible display, and further lights up the entire flexible display.
(2) When detecting, by using the acceleration sensors and the gyroscopes, that the included angle between the main screen and the secondary screen is greater than the first preset value (for example, the first preset value is 15°), the mobile phone determines an expansion action performed by the user on the flexible display, and further lights up the entire flexible display. The foregoing two optional solutions are easy to implement.

### Scenario 3

In the scenario 3, when the flexible display is in a black screen (or screen-off) state, the user may wake up the flexible display of the mobile phone by performing a preset gesture on the flexible display. The preset gesture may be a tap operation, a double-tap operation, a sliding operation, a pressing operation, or the like. This is not limited in this embodiment of this application.

For example, the double-tap operation is used as the foregoing preset operation. In a black screen (or screen-off) state, the mobile phone may set a touch function of the flexible display to be in an "always on" (always on) state. As shown in FIG. 11(a), if the flexible display 301 detects that the user has inputed a double-tap operation, the flexible display 301 may report, in an interrupted form, a screen-on event to the power manager service (PMS) at the application program framework layer. Similar to the scenario 1 or the scenario 2, after receiving the screen-on event, the power manager service may identify a current physical form of the flexible display 301 by using the status monitoring service. For example, the flexible display 301 is in an expanded state. The status monitoring service may report the current physical form of the flexible display 301 to the display policy service.

In addition, after detecting the double-tap operation performed by the user, the flexible display 301 may further report, to the display policy service, coordinates corresponding to the operation of double taping the flexible display 301 by the user. In this case, the display policy service may determine, based on the coordinates and the current physical form of the flexible display 301, a screen that needs to be lit up currently. For example, if the physical form of the flexible display 301 is an expanded state, regardless of the coordinates corresponding to the operation of double taping the flexible display 301 by the user, the display policy service may determine that a screen that needs to be lit up is the entire flexible display 301 (that is, a large screen) including the main screen 702 and the secondary screen 703. In this case, the display policy service may notify the power manager service that a current display mode is a large-screen display mode. In this case, as shown in FIG. 11(b), the power manager service may invoke a corresponding interface to power on the entire flexible display 301, and perform display on the entire flexible display 301 by using the display manager service.

In some other embodiments, as shown in FIG. 12(a), if the physical form of the flexible display is a folded state (or a support state) when the user double-taps the flexible display, the display policy service may determine, based on coordinates corresponding to the operation of double taping the flexible display by the user, whether a screen that needs to be lit up is specifically the main screen 702 or the secondary screen 703. For example, if the coordinates corresponding to the operation of double taping the flexible display by the user are located on the main screen 702, the display policy service may determine that the screen that needs to be lit up is specifically the main screen 702. If the coordinates corresponding to the operation of double taping the flexible display by the user are located on the secondary screen 703, the display policy service may determine that the screen that needs to be lit up is specifically the secondary screen 703. For example, as shown in FIG. 12(b), when the flexible display is in a folded state, the user double-taps the main screen 702 of the flexible display. Therefore, the mobile phone can automatically light up the main screen 702 for display.

The foregoing embodiment provides the descriptions by using the example in which the double-tap operation is used as the preset gesture. It can be understood that the preset gesture may alternatively be a tap operation, a floating touch gesture, or a tap operation, a sliding operation, or the like performed by using a stylus. This is not limited in this embodiment of this application.

In other words, if detecting, in a black screen state, that the user has performed the preset gesture on the flexible display, the mobile phone can automatically light up a corresponding screen based on the specific physical form of the flexible display and a location at which the preset gesture is triggered on the flexible display. In this way, the user can wake up the flexible display in different physical forms by using the preset gesture.

### Scenario 4

In the scenario 4, when the flexible display is in a black screen (or screen-off) state, the user may wake up the flexible display of the mobile phone by using a hand raising operation.

For example, when the flexible display is in the black screen (or screen-off) state, the mobile phone may set a sensor for detecting a hand raising operation, such as a gyroscope or an acceleration sensor, to be in an "always on" (always on) state. The mobile phone may use these sensors to detect in real time whether the user has performed a hand raising operation on the mobile phone. As shown in FIG. 13(a), if detecting that the user has performed a hand raising operation, a corresponding sensor may report a screen-on event to the power manager service (PMS). Similar to the scenario 1 to the scenario 3, after receiving the screen-on event, the power manager service may identify a current physical form of the flexible display 301 by using the status monitoring service. In addition, the status monitoring service may report the identified physical form of the flexible display 301 to the display policy service.

If it is identified that the flexible display 301 is in an expanded state currently, the display policy service may determine the entire flexible display 301 (that is, a large screen) including the main screen 702 and the secondary screen 703 as a screen that needs to be lit up. In this case, the display policy service may notify the power manager service that a current display mode is a large-screen display mode. Further, as shown in FIG. 13(b), the power manager service may invoke a corresponding interface to power on the entire flexible display 301, and perform display on the entire flexible display 301 by using the display manager service.

Correspondingly, as shown in FIG. 14(a), if the flexible display is in a folded state when the user performs a hand raising operation, after the status monitoring service identifies that the flexible display is in a folded state, the main screen 702 and the secondary screen 703 each may invoke data detected by the gyroscope and the acceleration sensor, to determine a magnitude and a direction of gravity G. Further, a screen currently facing upward is determined by calculating an included angle between the gravity G and the z axis of the coordinate system on the main screen 702 and an included angle between the gravity G and the z axis of the coordinate system on the secondary screen 703. As shown in FIG. 4, if the included angle between the gravity G and the z axis on the secondary screen 703 (that is, the secondary screen 42 in FIG. 4) is an acute angle, and the included angle between the gravity G and the z axis on the main screen 702 (that is, the main screen 41 in FIG. 4) is an obtuse angle, the screen currently facing upward is the main screen 702. In this case, the mobile phone may determine the main screen 702 facing upward as a screen that needs to be lit up currently.

Alternatively, after the status monitoring service identifies that the flexible display is in a folded state, the main screen 702 and the secondary screen 703 each may invoke a sensor such as a camera, an infrared sensor, an optical proximity sensor, or a touch component to identify whether a screen facing the user exists. As shown in FIG. 14(b), when the flexible display is in a folded state, and the main screen 702 faces the user, the display policy service may determine that a screen that needs to be lit up currently is the main screen 702. In this case, the display policy service may notify the power manager service that a current display mode is a main-screen display mode. Further, the power manager service may invoke a corresponding interface to power on the main screen 702, and perform display on the main screen 702 by using the display manager service. Correspondingly, if the flexible display is in a folded state and the secondary screen 703 faces the user, the mobile phone can automatically light up the secondary screen 703 for display.

In some embodiments, if it is detected that no screen faces the user exists, the mobile phone may light up a screen currently facing upward. In other words, when the mobile phone is in a folded state, a screen facing the user is most likely to be used. Therefore, the mobile phone may preferentially light up a detected screen facing the user. If it is detected that no screen faces the user exists, a screen currently facing upward is also relatively likely to be used by the user. In this case, the mobile phone may light up the detected screen placed upward, so as to wake up, for the user, the screen that is relatively likely to be used, for the user to use.

It should be noted that, in the scenario 1 to the scenario 4, methods used by the mobile phone in different scenarios to intelligently adapt to a current physical form of the flexible display to wake up a corresponding screen are described. It can be understood that in another scenario of waking up the flexible display, the mobile phone may also light up a corresponding screen based on a current specific physical form of the flexible display.

For example, when the flexible display is in a black screen (or screen-off) state, the user may enter a fingerprint into the mobile phone to wake up the flexible display of the mobile phone. For example, after collecting the fingerprint entered by the user, a fingerprint sensor may report a screen-on event to the power manager service (PMS). Similarly, the power manager service may invoke the status monitoring service and the display policy service, to determine, based on a physical form of the flexible display and a specific direction of the mobile phone, a specific screen that needs to be lit up. For another example, when the flexible display is in a black screen (or screen-off) state, if the mobile phone detects a trigger event such as a USB plugging/unplugging event or an incoming call event, the mobile phone may also light up a corresponding screen based on a physical form of the flexible display according to the methods described in the foregoing embodiments. Details are not described in this embodiment of this application again.

In some embodiments of this application, after the mobile phone wakes up the flexible display according to the foregoing methods, if the user expects to switch the screen that is currently woken up, for example, when the screen that is currently woken up is the main screen of the flexible display, and the user expects to switch content currently displayed on the main screen to the secondary screen of the flexible display for continued display, the user may manually switch a display location of the currently displayed content by performing a preset operation such as a double-tap operation or a sliding operation.

For example, as shown in FIG. 15(a), when the flexible display is in a support state (or a folded state), the mobile phone wakes up the secondary screen 703 of the flexible display, and displays a desktop (which may also be referred to as a home screen) of the mobile phone on the secondary screen 703. If the user expects to switch the desktop displayed on the secondary screen 703 to the main screen 702 for continued display, the user may perform a double-tap operation on the main screen 702. After detecting the double-tap operation performed by the user, the mobile phone may obtain coordinates that are corresponding to the current double-tap operation and that are on the flexible display. In addition, the mobile phone may obtain a current physical form of the flexible display.

If the flexible display is in a support state (or a folded state), and the coordinates that are corresponding to the current double-tap operation and that are on the flexible display are located on the main screen 702, it indicates that the user expects to switch content displayed on the secondary screen 703 to the main screen 702 for display. In this case, as shown in FIG. 15(b), the mobile phone may power off the secondary screen 703, light up the main screen 702, and continue to display the desktop of the mobile phone on the main screen 702.

Alternatively, when switching content displayed on the main screen 702 to the secondary screen 703, the mobile phone may synchronously display the content on the main screen 702 and the secondary screen 703 for a period of time (for example, one second), and then power off the main screen 702 to turn off the main screen 702. This can avoid a problem that the displayed content cannot continue to be displayed after screen switching because the displayed content cannot be switched to the secondary screen 703 in a timely manner after the main screen 702 is turned off, thereby implementing seamless transition of the displayed content between the main screen 702 and the secondary screen 703.

In some other embodiments, as shown in FIG. 16(a), the secondary screen 703 of the flexible display is lit up when the flexible display is in an expanded state. In this case, if the flexible display receives a double-tap operation (or the flexible display may receive another preset operation, and this is not limited herein) performed by the user, as shown in FIG. 16(b), regardless of whether coordinates corresponding to the double-tap operation are located on the main screen 702 or the secondary screen 703, the mobile phone may continue to display the desktop of the mobile phone by using the entire flexible display 301 including the main screen 702 and the secondary screen 703 as an independent display region.

In this way, if the mobile phone incorrectly wakes up a screen that is on the flexible display and that the user does not expect to view, the user can manually switch, by performing a preset operation, currently displayed content to a screen corresponding to a current physical form of the flexible display for continued display, to improve use experience of the user.

In some other embodiments of this application, after waking up the flexible display according to the foregoing methods, the mobile phone may further automatically switch a display location of currently displayed content on the flexible display based on a change status of a physical form of the flexible display.

For example, as shown in FIG. 17(a), when the flexible display 301 is in an expanded state, the mobile phone lights up the entire flexible display 301, and displays the desktop of the mobile phone on the entire flexible display 301. If detecting that the flexible display 301 changes from the expanded state to a folded state, the mobile phone may invoke a sensor such as a camera, an infrared sensor, an optical proximity sensor, or a touch component to identify specific directions/a specific direction of the main screen and/or the secondary screen of the mobile phone. Further, as shown in FIG. 17(b), the mobile phone may switch the desktop originally displayed on the entire flexible display 301 to the main screen (or the secondary screen) facing the user, for continued display. In FIG. 17(b), an example in which the main screen faces the user is used.

For another example, as shown in FIG. 18(a), when the flexible display is in a folded state, the mobile phone lights up the main screen 702 of the flexible display, and displays the desktop of the mobile phone on the main screen 702. If detecting that the flexible display changes from the folded state to an expanded state, as shown in FIG. 18(b), the mobile phone may switch the desktop originally displayed on the main screen 702 to the entire flexible display 301 for continued display.

In some other embodiments of this application, after waking up the flexible display according to the foregoing methods, the mobile phone may alternatively automatically switch a display location of currently displayed content on the flexible display based on a current posture of gripping the mobile phone by the user.

For example, as shown in FIG. 19, when the flexible display is in a folded state, the flexible display includes the main screen 702 and the secondary screen 703. When the flexible display is in a folded state, if the mobile phone lights up the main screen 702 of the flexible display, and displays the desktop of the mobile phone on the main screen 702, after lighting up the main screen 702, the mobile phone may detect, in real time by using the acceleration sensor, the gyroscope, or the like, whether a flip operation is performed on the mobile phone. In addition, the mobile phone may further obtain in real time a current touch location of the user reported by the touch component, and further determine, by using a preset gripping algorithm, a current posture of gripping the mobile phone by the user.

For example, as shown in FIG. 19, a detection module may be disposed at an HAL (hardware abstract layer, hardware abstract layer) of the mobile phone. A preset gripping algorithm and a flipping detection algorithm are configured in the detection module. After it is detected, by using the flipping detection algorithm, that a flip operation is performed on the mobile phone, a current posture of gripping the mobile phone by the user may be determined by using the preset gripping algorithm. The detection module may determine, based on the gripping posture, whether content that is being displayed on a screen needs to be switched. If the screen needs to be switched, the detection module may send, by using a TP driver at the kernel layer, a screen switching instruction to an input manager (input manager) at a framework layer, so that the mobile phone switches content displayed on the main screen 702 to the secondary screen 703 for continued display; or the mobile phone may switch content displayed on the secondary screen 703 to the main screen 702 for continued display.

Still referring to FIG. 20A and FIG. 20B, when a flip operation is performed on the mobile phone, if detecting that a gripping posture of the user does not change, the mobile phone may continue to display the desktop of the mobile phone on the main screen 702 in a folded state. In this case, the mobile phone does not need to switch a display location of the desktop on the flexible display. For example, when the mobile phone is flipped, if the mobile phone detects that a contact area and a contact location between a hand of the user and the mobile phone do not change significantly, the mobile phone may determine that the gripping posture of the user does not change. When the gripping posture does not change, if a flip operation is performed on the mobile phone in a folded state, it usually indicates that the user expects to flip the mobile phone for another user to perform viewing. Therefore, the mobile phone does not need to switch a screen on which display is being performed currently.

Correspondingly, as shown in FIG. 21A and FIG. 21B, when the flexible display is in a folded state, the mobile phone lights up the main screen 702 of the flexible display, and displays the desktop of the mobile phone on the main screen 702. When a flip operation is performed on the mobile phone, if detecting that a gripping posture of the user satisfies a change law of flipping the mobile phone in the palm, the mobile phone may switch the desktop originally displayed on the main screen 702 to the secondary screen 703 for continued display. For example, as shown in FIG. 21A and FIG. 21B, before the mobile phone is flipped, a thumb of the user is close to a first side edge 1901 of the main screen 702, and one or more fingers of the hand of the user other than the thumb are close to a second side edge 1902 of the main screen 702. In a process in which the user flips the mobile phone in the palm, the thumb of the user gradually approaches the second side edge 1902 of the main screen 702, and the four fingers of the hand of the user other than the thumb gradually approach the first side edge 1901 of the main screen 702. Finally, after the user flips the mobile phone in the palm, still referring to FIG. 21A and FIG. 21B, the thumb of the user is close to the second side edge 1902 of the main screen 702, and the four fingers of the hand of the user other than the thumb are close to the first side edge 1901 of the main screen 702. In this case, when the flip operation is performed on the mobile phone, if detecting that a contact area and a contact location between the hand of the user and the mobile phone satisfy the foregoing change law, the mobile phone may determine that the user has performed the flip operation on the mobile phone in the palm. In this case, a screen facing the user changes from the main screen 702 to the secondary screen 703. Therefore, the mobile phone may switch the desktop originally displayed on the main screen 702 to the secondary screen 703 for continued display.

In other words, after the mobile phone wakes up the flexible display, when a flip operation is performed on the mobile phone, the mobile phone may intelligently switch displayed content between different screens based on a change status of a gripping posture of the user. This ensures that when the flexible display is in various physical forms, the mobile phone can present displayed content to the user by using a screen (for example, the main screen, the secondary screen, or the entire flexible display) facing the user. In this way, the flexible display can provide relatively desirable use experience for the user in different physical forms.

An embodiment of this application discloses an electronic device, including a processor, and a memory, an input device, and an output device that are connected to the processor. The input device and the output device may be integrated as one device. For example, a touch component of a flexible display may be used as an input device, and a display of the flexible display may be used as an output device.

In this case, as shown in FIG. 22, the electronic device may include a flexible display 2101 including a touch component 2106 and a display 2107, one or more processors 2102, one or more memories 2103, one or more sensors 2108, one or more application programs (not shown), and one or more computer programs 2104. The foregoing components may be connected to each other through one or more communications buses 2105. The one or more computer programs 2104 are stored in the memory 2103 and are configured to be executed by the one or more processors 2102. The one or more computer programs 2104 include instructions, and the instructions may be used to perform the steps in the foregoing embodiments. All related content of each step in the foregoing method embodiments may be cited in function descriptions of a corresponding entity component. Details are not described herein again.

For example, the processor 2102 may be specifically the processor 110 shown in FIG. 1; the memory 2103 may be specifically the internal memory 121 and/or the external memory 120 shown in FIG. 1; the flexible display 2101 may be specifically the flexible display 301 shown in FIG. 1; and the sensor 2108 may be specifically the gyroscope sensor 180B, the acceleration sensor 180E, or the optical proximity sensor 180G in the sensor module 180 shown in FIG. 1, or may be one or more of an infrared sensor, a Hall effect sensor, and the like. This is not limited in this embodiment of this application.

The foregoing descriptions about implementations allow a person skilled in the art to understand that, for the purpose of convenient and brief description, division into the foregoing function modules is taken as an example for illustration. In actual application, the foregoing functions can be allocated to different modules and implemented according to a requirement, that is, an inner structure of an apparatus is divided into different function modules to implement all or some of the functions described above. For a detailed working process of the foregoing system, apparatus, and unit, refer to a corresponding process in the foregoing method embodiments, and details are not described herein again.

Functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the embodiments of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of the embodiments of this application, but are not intended to limit the protection scope of the embodiments of this application. Therefore, the protection scope of the embodiments of this application shall be subject to the protection scope of the claims.

## Claims

1. A display method for an electronic device (100) with a flexible display (301), wherein physical forms of the flexible display (301) comprise an expanded state and a non-expanded state, when the flexible display (301) is in the non-expanded state, the flexible display (301) is divided into a main screen (702) and a secondary screen (703), and the method comprises:
when the flexible display (301) is in a black screen state, detecting, by the electronic device (100), a trigger operation used for waking up the flexible display (301), wherein the trigger operation is an operation of lifting the electronic device (100); and
if the flexible display (301) is in the expanded state, lighting up, by the electronic device (100), the entire flexible display (301) in response to the trigger operation; or
if the flexible display (301) is in the non-expanded state, lighting up, by the electronic device (100), a first screen in response to the trigger operation, wherein the first screen is the main screen (702) or the secondary screen (703);
wherein if the flexible display (301) is in the non-expanded state, before the lighting, by the electronic device (100), a first screen in response to the trigger operation, the method further comprises:
determining, by the electronic device (100) by using the data detected by an acceleration sensor and a gyroscope, that the screen facing upward is a first candidate screen;
determining, by the electronic device (100) by using detection data reported by the at least one of an infrared sensor, a camera, an optical proximity sensor, or a touch component of the flexible display (301), whether a second candidate screen facing the user exists;
if a second candidate screen facing the user exists, determining, by the electronic device (100), the second candidate screen as the first screen; and
if no candidate screen facing the user exists, determining, by the electronic device (100), the first candidate screen as the first screen,
wherein the method further comprises:
displaying, by the electronic device (100), content on the first screen;
detecting, by the electronic device (100), a preset operation performed on the flexible display (301), wherein an action point of the preset operation is located on a second screen, and when the first screen is the main screen (702), the second screen is the secondary screen (703), or when the first screen is the secondary screen (703), the second screen is the main screen (702); and
if the flexible display (301) is in the expanded state, displaying, by the electronic device (100) on the entire flexible display (301) in response to the preset operation, the content displayed on the first screen; or
if the flexible display (301) is in the non-expanded state, displaying, by the electronic device (100) on the second screen in response to the preset operation, the content displayed on the first screen, wherein the content is synchronously displayed on the first screen and the second screen for a period of time before the first screen is turned off.

2. The method according to claim 1, wherein the method further comprises:
when the flexible display (301) is in the expanded state, displaying, by the electronic device (100), content on the flexible display (301); and
if detecting that the flexible display (301) is switched from the expanded state to the non-expanded state, displaying, by the electronic device (100) on the main screen (702) or the secondary screen (703) facing the user, the content displayed on the entire flexible display (301).

3. The method according to claim 1 or 2, wherein the method further comprises:
when the flexible display (301) is in the non-expanded state, displaying, by the electronic device (100), content on the main screen (702) or the secondary screen (703); and
if detecting that the flexible display (301) is switched from the non-expanded state to the expanded state, displaying, by the electronic device (100) on the entire flexible display (301), the content displayed on the main screen (702) or the secondary screen (703).

4. The method according to any one of claims 1 to 3, wherein the method further comprises:
when the flexible display (301) is in the non-expanded state, displaying, by the electronic device (100), content on a first screen, wherein the first screen is the main screen (702) or the secondary screen (703);
if detecting that the user has performed a flip operation on the electronic device (100), detecting, by the electronic device (100), a change status of a gripping posture of the user;
if the gripping posture remains unchanged when the electronic device is flipped, continuing, by the electronic device (100), to display the content on the first screen; and
if the change status of the gripping posture when the electronic device (100) is flipped satisfies a preset condition, switching, by the electronic device (100), the content displayed on the first screen to a second screen for continued display, and when the first screen is the main screen (702), the second screen is the secondary screen (703), or when the first screen is the secondary screen (703), the second screen is the main screen (702).

5. The method according to claim 4, wherein the preset condition is: before the electronic device (100) is flipped, a thumb of the user is close to a first side edge, and the remaining fingers of the user are close to a second side edge;
and after the electronic device (100) is flipped, the thumb of the user is close to the second side edge, and the remaining fingers of the user are close to the first side edge, wherein the first side edge and the second side edge are two side edges of the first screen that are opposite to each other.

6. An electronic device, comprising:
a flexible display (2101), wherein physical forms of the flexible display (2101) comprise an expanded state and a non-expanded state, and when the flexible display (2101) is in the non-expanded state, the flexible display (2101) is divided into a main screen and a secondary screen;
one or more processors (2102);
one or more memories (2103);
one or more sensors (2108); and
one or more computer programs (2104), wherein the one or more computer programs (2104) are stored in the one or more memories (2103), the one or more computer programs (2104) comprise instructions, and when the instructions are executed by the electronic device, the electronic device is enabled to perform the display method according to any one of claims 1 to 5.

7. A computer-readable storage medium, wherein the computer-readable storage medium stores instructions, and when the instructions are run on the electronic device according to claim 6, the electronic device is enabled to perform the display method according to any one of claims 1 to 5.

8. A program product comprising instructions, wherein when the program product is run on the electronic device according to claim 6, the electronic device is enabled to perform the display method according to any one of claims 1 to 5.

## Patentansprüche

1. Anzeigeverfahren für eine elektronische Vorrichtung (100) mit einer flexiblen Anzeige (301), wobei physische Formen der flexiblen Anzeige (301) einen expandierten Zustand und einen nicht expandierten Zustand umfassen, wobei, wenn sich die flexible Anzeige (301) in dem nicht expandierten Zustand befindet, die flexible Anzeige (301) in einen Hauptbildschirm (702) und einen Sekundärbildschirm (703) unterteilt ist, und das Verfahren umfasst:
wenn sich die flexible Anzeige (301) in einem schwarzen Bildschirmzustand befindet, Erkennen, durch die elektronische Vorrichtung (100), eines Auslösevorgangs, der zum Aufwecken der flexiblen Anzeige (301) verwendet wird, wobei der Auslösevorgang ein Vorgang zum Anheben der elektronischen Vorrichtung (100) ist; und
falls sich die flexible Anzeige (301) in dem expandierten Zustand befindet, Aufleuchten, durch die elektronische Vorrichtung (100), der gesamten flexiblen Anzeige (301) als Reaktion auf den Auslösevorgang; oder
falls sich die flexible Anzeige (301) in dem nicht expandierten Zustand befindet, Aufleuchten, durch die elektronische Vorrichtung (100), eines ersten Bildschirms als Reaktion auf den Auslösevorgang, wobei der erste Bildschirm der Hauptbildschirm (702) oder der Sekundärbildschirm (703) ist;
wobei, falls sich die flexible Anzeige (301) in dem nicht expandierten Zustand befindet, vor dem Aufleuchten, durch die elektronische Vorrichtung (100), eines ersten Bildschirms als Reaktion auf den Auslösevorgang, das Verfahren ferner umfasst:
Bestimmen, durch die elektronische Vorrichtung (100) durch Verwenden der Daten, die durch einen Beschleunigungssensor und ein Gyroskop erkannt werden, dass der nach oben gerichtete Bildschirm ein erster Kandidatenbildschirm ist;
Bestimmen, durch die elektronische Vorrichtung (100), durch Verwenden von Erkennungsdaten, die durch das mindestens eine von einem Infrarotsensor, einer Kamera, einem optischen Näherungssensor oder einer Berührungskomponente der flexiblen Anzeige (301) gemeldet werden, ob ein zweiter Kandidatenbildschirm, der zu dem Benutzer gerichtet ist, vorhanden ist;
falls ein zweiter Kandidatenbildschirm, der zu dem Benutzer gerichtet ist, vorhanden ist, Bestimmen, durch die elektronische Vorrichtung (100), des zweiten Kandidatenbildschirms als den ersten Bildschirm; und
falls kein Kandidatenbildschirm, der zu dem Benutzer gerichtet ist, vorhanden ist, Bestimmen, durch die elektronische Vorrichtung (100), des ersten Kandidatenbildschirms als den ersten Bildschirm,
wobei das Verfahren ferner umfasst:
Anzeigen, durch die elektronische Vorrichtung (100), von Inhalt auf dem ersten Bildschirm; Erkennen, durch die elektronische Vorrichtung (100), eines voreingestellten Vorgangs, der auf der flexiblen Anzeige (301) durchgeführt wird, wobei ein Aktionspunkt des voreingestellten Vorgangs auf einem zweiten Bildschirm gelegen ist und, wenn der erste Bildschirm der Hauptbildschirm (702) ist, der zweite Bildschirm der Sekundärbildschirm (703) ist, oder, wenn der erste Bildschirm der Sekundärbildschirm (703) ist, der zweite Bildschirm der Hauptbildschirm (702) ist; und
falls sich die flexible Anzeige (301) in dem expandierten Zustand befindet, Anzeigen, durch die elektronische Vorrichtung (100) auf der gesamten flexiblen Anzeige (301) als Reaktion auf den voreingestellten Vorgang, des Inhalts, der auf dem ersten Bildschirm angezeigt wird; oder
falls sich die flexible Anzeige (301) in dem nicht expandierten Zustand befindet, Anzeigen, durch die elektronische Vorrichtung (100) auf dem zweiten Bildschirm als Reaktion auf den voreingestellten Vorgang, des Inhalts, der auf dem ersten Bildschirm angezeigt wird, wobei der Inhalt auf dem ersten Bildschirm und dem zweiten Bildschirm für einen Zeitraum, bevor der erste Bildschirm ausgeschaltet wird, synchron angezeigt wird.

2. Verfahren nach Anspruch 1, wobei das Verfahren ferner umfasst:
wenn sich die flexible Anzeige (301) in dem expandierten Zustand befindet, Anzeigen, durch die elektronische Vorrichtung (100), von Inhalt auf der flexiblen Anzeige (301); und
falls erkannt wird, dass die flexible Anzeige (301) von dem expandierten Zustand zu dem nicht expandierten Zustand gewechselt wird, Anzeigen, durch die elektronische Vorrichtung (100) auf dem Hauptbildschirm (702) oder dem Sekundärbildschirm (703), die zu dem Benutzer gerichtet sind, des Inhalts, der auf der gesamten flexiblen Anzeige (301) angezeigt wird.

3. Verfahren nach Anspruch 1 oder 2, wobei das Verfahren ferner umfasst:
wenn sich die flexible Anzeige (301) in dem nicht expandierten Zustand befindet, Anzeigen, durch die elektronische Vorrichtung (100), von Inhalt auf dem Hauptbildschirm (702) oder dem Sekundärbildschirm (703); und
falls erkannt wird, dass die flexible Anzeige (301) von dem nicht expandierten Zustand zu dem expandierten Zustand gewechselt wird, Anzeigen, durch die elektronische Vorrichtung (100) auf der gesamten flexiblen Anzeige (301), des Inhalts, der auf dem Hauptbildschirm (702) oder dem Sekundärbildschirm (703) angezeigt wird.

4. Verfahren nach einem der Ansprüche 1 bis 3, wobei das Verfahren ferner umfasst:
wenn sich die flexible Anzeige (301) in dem nicht expandierten Zustand befindet, Anzeigen, durch die elektronische Vorrichtung (100), von Inhalt auf einem ersten Bildschirm, wobei der erste Bildschirm der Hauptbildschirm (702) oder der Sekundärbildschirm (703) ist;
falls erkannt wird, dass der Benutzer einen Umdrehvorgang auf der elektronischen Vorrichtung (100) durchgeführt hat, Erkennen, durch die elektronische Vorrichtung (100), eines Änderungsstatus einer Greifhaltung des Benutzers;
falls die Greifhaltung unverändert bleibt, wenn die elektronische Vorrichtung umgedreht wird, Fortsetzen, durch die elektronische Vorrichtung (100), des Anzeigens des Inhalts auf dem ersten Bildschirm; und
falls der Änderungsstatus der Greifhaltung, wenn die elektronische Vorrichtung (100) umgedreht wird, eine voreingestellte Bedingung erfüllt, Wechseln, durch die elektronische Vorrichtung (100), des Inhalts, der auf dem ersten Bildschirm angezeigt wird, zu einem zweiten Bildschirm für fortgesetztes Anzeigen, und, wenn der erste Bildschirm der Hauptbildschirm (702) ist, der zweite Bildschirm der Sekundärbildschirm (703) ist oder, wenn der erste Bildschirm der Sekundärbildschirm (703) ist, der zweite Bildschirm der Hauptbildschirm (702) ist.

5. Verfahren nach Anspruch 4, wobei die voreingestellte Bedingung ist: bevor die elektronische Vorrichtung (100) umgedreht wird, ein Daumen des Benutzers sich nahe einer ersten Seitenkante befindet und die verbleibenden Finger des Benutzers sich nahe einer zweiten Seitenkante befinden; und nachdem die elektronische Vorrichtung (100) umgedreht wurde, der Daumen des Benutzers sich nahe der zweiten Seitenkante befindet und die verbleibenden Finger des Benutzers sich nahe der ersten Seitenkante befinden, wobei die erste Seitenkante und die zweite Seitenkante zwei einander gegenüberliegende Seitenkanten des ersten Bildschirms sind.

6. Elektronische Vorrichtung, die umfasst:
eine flexible Anzeige (2101), wobei physische Formen der flexiblen Anzeige (2101) einen expandierten Zustand und einen nicht expandierten Zustand umfassen, und, wenn sich die flexible Anzeige (2101) in dem nicht expandierten Zustand befindet, die flexible Anzeige (2101) in einen Hauptbildschirm und einen Sekundärbildschirm unterteilt ist;
einen oder mehrere Prozessoren (2102);
einen oder mehrere Speicher (2103);
einen oder mehrere Sensoren (2108); und
ein oder mehrere Computerprogramme (2104), wobei das eine oder die mehreren Computerprogramme (2104) in dem einen oder den mehreren Speichern (2103) gespeichert sind, wobei das eine oder die mehreren Computerprogramme (2104) Anweisungen umfassen und, wenn die Anweisungen durch die elektronische Vorrichtung ausgeführt werden, die elektronische Vorrichtung aktiviert wird, um das Anzeigeverfahren nach einem der Ansprüche 1 bis 5 durchzuführen.

7. Computerlesbares Speicherungsmedium, wobei das computerlesbare Speicherungsmedium Anweisungen speichert und, wenn die Anweisungen auf der elektronischen Vorrichtung nach Anspruch 6 laufen gelassen werden, die elektronische Vorrichtung aktiviert wird, um das Anzeigeverfahren nach einem der Ansprüche 1 bis 5 durchzuführen.

8. Programmprodukt, das Anweisungen umfasst, wobei, wenn das Programmprodukt auf der elektronischen Vorrichtung nach Anspruch 6 laufen gelassen wird, die elektronische Vorrichtung aktiviert wird, um das Anzeigeverfahren nach einem der Ansprüche 1 bis 5 durchzuführen.

## Revendications

1. Procédé d'affichage pour un dispositif électronique (100) doté d'une unité d'affichage flexible (301), dans lequel des formes physiques de l'unité d'affichage flexible (301) comprennent un état étendu et un état non étendu, lorsque l'unité d'affichage flexible (301) se trouve dans l'état non étendu, l'unité d'affichage flexible (301) est divisée en un écran principal (702) et un écran secondaire (703), et le procédé comprend :
lorsque l'unité d'affichage flexible (301) se trouve dans un état d'écran noir, la détection, par le dispositif électronique (100), d'une opération de déclenchement utilisée pour réveiller l'unité d'affichage flexible (301), dans lequel l'opération de déclenchement est une opération de levage du dispositif électronique (100) ; et
si l'unité d'affichage flexible (301) se trouve à l'état étendu, l'éclairage, par le dispositif électronique (100), de l'intégralité de l'unité d'affichage flexible (301) en réponse à l'opération de déclenchement ; ou
si l'unité d'affichage flexible (301) se trouve dans l'état non étendu, l'éclairage, par le dispositif électronique (100), d'un premier écran en réponse à l'opération de déclenchement, dans lequel le premier écran est l'écran principal (702) ou l'écran secondaire (703) ;
dans lequel, si l'unité d'affichage flexible (301) se trouve dans l'état non étendu, avant l'éclairage, par le dispositif électronique (100), d'un premier écran en réponse à l'opération de déclenchement, le procédé comprend en outre :
le fait de déterminer, par le dispositif électronique (100) en utilisant les données détectées par un capteur d'accélération et un gyroscope, que l'écran orienté vers le haut est un premier écran candidat ;
le fait de déterminer, par le dispositif électronique (100) en utilisant des données de détection signalées par l'au moins un parmi un capteur infrarouge, une caméra, un capteur de proximité optique, ou un composant tactile de l'unité d'affichage flexible (301), s'il existe un second écran candidat orienté vers l'utilisateur ;
s'il existe un second écran candidat orienté vers l'utilisateur, la détermination, par le dispositif électronique (100), du second écran candidat comme premier écran ; et
s'il n'existe pas d'écran candidat orienté vers l'utilisateur, la détermination, par le dispositif électronique (100), du premier écran candidat comme premier écran,
dans lequel le procédé comprend en outre :
l'affichage, par le dispositif électronique (100), d'un contenu sur le premier écran ;
la détection, par le dispositif électronique (100), d'une opération prédéfinie réalisée sur l'unité d'affichage flexible (301), dans lequel un point d'action de l'opération prédéfinie est situé sur un second écran, et lorsque le premier écran est l'écran principal (702), le second écran est l'écran secondaire (703), ou lorsque le premier écran est l'écran secondaire (703), le second écran est l'écran principal (702) ; et
si l'unité d'affichage flexible (301) se trouve dans l'état étendu, l'affichage, par le dispositif électronique (100) sur l'intégralité de l'unité d'affichage flexible (301) en réponse à l'opération prédéfinie, du contenu affiché sur le premier écran ; ou
si l'unité d'affichage flexible (301) se trouve dans l'état non étendu, l'affichage, par le dispositif électronique (100) sur le second écran en réponse à l'opération prédéfinie, du contenu affiché sur le premier écran, dans lequel le contenu est affiché de manière synchrone sur le premier écran et le second écran pendant une période de temps avant que le premier écran ne soit éteint.

2. Procédé selon la revendication 1, dans lequel le procédé comprend en outre :
lorsque l'unité d'affichage flexible (301) se trouve dans l'état étendu, l'affichage, par le dispositif électronique (100), d'un contenu sur l'unité d'affichage flexible (301) ; et
s'il est détecté que l'unité d'affichage flexible (301) est passée de l'état étendu à l'état non étendu, l'affichage, par le dispositif électronique (100) sur l'écran principal (702) ou l'écran secondaire (703) orienté vers l'utilisateur, du contenu affiché sur l'intégralité de l'unité d'affichage flexible (301).

3. Procédé selon la revendication 1 ou 2, dans lequel le procédé comprend en outre :
lorsque l'unité d'affichage flexible (301) se trouve dans l'état non étendu, l'affichage, par le dispositif électronique (100), d'un contenu sur l'écran principal (702) ou l'écran secondaire (703) ; et
s'il est détecté que l'unité d'affichage flexible (301) est passée de l'état non étendu à l'état étendu, l'affichage, par le dispositif électronique (100) sur l'intégralité de l'unité d'affichage flexible (301), du contenu affiché sur l'écran principal (702) ou l'écran secondaire (703).

4. Procédé selon l'une quelconque des revendications 1 à 3, dans lequel le procédé comprend en outre :
lorsque l'unité d'affichage flexible (301) se trouve dans l'état non étendu, l'affichage, par le dispositif électronique (100), d'un contenu sur un premier écran, dans lequel le premier écran est l'écran principal (702) ou l'écran secondaire (703) ;
s'il est détecté que l'utilisateur a réalisé une opération de retournement sur le dispositif électronique (100), la détection, par le dispositif électronique (100), d'un statut de changement d'une posture de préhension de l'utilisateur ;
si la posture de préhension demeure inchangée lorsque le dispositif électronique (100) est retourné, la poursuite, par le dispositif électronique (100), de l'affichage du contenu sur le premier écran ; et
si le statut de changement de la posture de préhension lorsque le dispositif électronique (100) est retourné satisfait à une condition prédéfinie, le passage, par le dispositif électronique (100), du contenu affiché sur le premier écran vers un second écran pour un affichage continu, et lorsque le premier écran est l'écran principal (702), le second écran est l'écran secondaire (703), ou lorsque le premier écran est l'écran secondaire (703), le second écran est l'écran principal (702).

5. Procédé selon la revendication 4, dans lequel la condition prédéfinie est : avant que le dispositif électronique (100) ne soit retourné, un pouce de l'utilisateur est proche d'un premier bord latéral, et les autres doigts de l'utilisateur sont proches d'un second bord latéral ; et après que le dispositif électronique (100) a été retourné, le pouce de l'utilisateur est proche du second bord latéral, et les autres doigts de l'utilisateur sont proches du premier bord latéral, dans lequel le premier bord latéral et le second bord latéral sont deux bords latéraux du premier écran qui sont opposés l'un à l'autre.

6. Dispositif électronique, comprenant :
une unité d'affichage flexible (2101), dans lequel des formes physiques de l'unité d'affichage flexible (2101) comprennent un état étendu et un état non étendu, et lorsque l'unité d'affichage flexible (2101) se trouve dans l'état non étendu, l'unité d'affichage flexible (2101) est divisée en un écran principal et un écran secondaire ;
un ou plusieurs processeurs (2102) ;
une ou plusieurs mémoires (2103) ;
un ou plusieurs capteurs (2108) ; et
un ou plusieurs programmes informatiques (2104), dans lequel le ou les programmes informatiques (2104) sont stockés dans la ou les mémoires (2103), le ou les programmes informatiques (2104) comprennent des instructions, et lorsque les instructions sont exécutées par le dispositif électronique, le dispositif électronique est en mesure de réaliser le procédé d'affichage selon l'une quelconque des revendications 1 à 5.

7. Support de stockage lisible par ordinateur, dans lequel le support de stockage lisible par ordinateur stocke des instructions, et lorsque les instructions sont exécutées sur le dispositif électronique selon la revendication 6, le dispositif électronique est en mesure de réaliser le procédé d'affichage selon l'une quelconque des revendications 1 à 5.

8. Produit-programme comprenant des instructions, dans lequel lorsque le produit-programme est exécuté sur le dispositif électronique selon la revendication 6, le dispositif électronique est en mesure de réaliser le procédé d'affichage selon l'une quelconque des revendications 1 à 5.
